# EUROPEAN PATENT APPLICATION

(11) **EP 1 881 699 A1**
(43) Date of publication of application: **23.01.2008**
(21) Application number: 06731065.6
(22) Date of filing: 04.04.2006
(51) Int. Cl.: H04N 5/335, H04N 5/225, H01L 27/14, H04N 17/00

(54) **SOLID-STATE IMAGING PICKUP DEVICE, CAMERA, AUTOMOBILE AND MONITORING DEVICE**

(30) Priority: 11.05.2005 JP 2005139103; 21.10.2005 JP 2005307838
(71) Applicant: MATSUSHITA ELECTRIC INDUSTRIAL CO., LTD., Osaka 571-8501 (JP)
(72) Inventor: TAKEDA, Katsumi, c/o Matsushita El. Ind. Co., Ltd., IPROC, 2-1-61, Shiromi, Chuo-ku, Osaka 540-6207 (JP)
(74) Representative: Pautex Schneider, Nicole Véronique
(86) International application number: PCT/JP2006/307117
(87) International publication number: WO 2006/120815

(57) **Abstract**

A solid-state imaging device according to the present invention includes: a plurality of photoelectric conversion units each of which generates a signal corresponding to the quantity of incident light; a plurality of readout units which read out the signals generated by the photoelectric conversion units; transfer paths which transfer the signals read out by each of the readout units; an output unit which outputs each of the signals transferred from the readout units via the transfer path; and a generation unit which generates a constant reference signal, in which the reference signal is outputted from the output unit via at least a part of the transfer path.

## Description

### Technical Field

The present invention relates to a solid-state imaging device, a camera, an automobile, and a monitoring device, which include a plurality of photoelectric conversion units each for generating a signal corresponding to the quantity of incident light, a plurality of readout units for reading out the signal generated by each of the photoelectric conversion units, and an output unit for outputting the signals transferred from the readout units via a transfer path.

### Background Art

In recent years, miniaturization of solid-state imaging devices has progressed, and the number of pixels has increased significantly, and the miniaturization necessitates improvement in reliability.

A testing device for testing reliability of solid-state imaging elements is disclosed in Patent Reference 1, for example. In this testing device, a probe is applied to solid-state imaging elements on a wafer to test various circuit elements.
Patent Reference 1: Japanese Unexamined Patent Application Publication No. 2001-8237

### Disclosure of Invention

### Problems that Invention is to Solve

In the case where a usage environment is extremely severe compared to that for a digital still camera, a digital video camera, or the like, such as when a solid-state imaging device is mounted on a vehicle, or in the case where a long lifespan is requested, a very high quality level is requested. There is a problem in that it is very difficult to achieve a sufficient quality level to satisfy this request, and it is impossible to avoid increase in costs.

An object of the present invention is to provide a solid-state imaging device, a camera, an automobile, and a monitoring device which are capable of easily maintaining the quality level without high costs in the case where the usage environment is severe or in the case where a long lifespan is demanded.

### Means to Solve the Problems

In order to achieve the object above, the solid-state imaging device according to the present invention is a solid-state imaging device including: a plurality of photoelectric conversion units each operable to generate a signal corresponding to a quantity of incident light; a plurality of readout units operable to read out the signals generated by said photoelectric conversion units; transfer paths for transferring the signals read out by each of said readout units; an output unit operable to output each of the signals transferred from said readout units via said transfer path; and a generation unit operable to generate a constant reference signal, in which the reference signal is outputted from said output unit via at least a part of said transfer path.

According to this structure, it is easy to detect a malfunction in the solid-state imaging device, such as an abnormality in the transfer path, by checking the level of the reference signal outputted. Thus, in the case where a malfunction has been detected in the solid-state imaging device after shipment, the malfunctioning solid-state imaging device in a system that includes the solid-state imaging device can be replaced by a new solid-state imaging device to recover a quality level. Therefore, even if the system is placed under a severe usage environment, a long lifespan is fulfilled. Thus, even if a product life of the solid-state imaging device is shorter than that of the system, a lifespan demanded for the system can be fulfilled, and it is easy to maintain the quality level by replacement even under a severe usage environment.

Here, the solid-state imaging device in which the constant reference signal may be at a fixed level between a first level and a second level, the first level may be a level of a signal that is generated by one of said photoelectric conversion units when the quantity of the incident light is zero, and the second level may be a level of a signal that is generated by one of said photoelectric conversion units and which has a level higher than the first level.

According to this structure, the reference signal may be, for example, at a value intermediate between the first level and the second level, which falls within a range of the signal levels that can be generated by the photoelectric conversion units. Therefore, output thereof is possible without the need to change rating of the output unit, and it is possible to avoid increase in costs of the output unit.

Here, the solid-state imaging device may further include a determination unit which determines whether the reference signal outputted from said output unit falls within a normal range which is between an upper-limit value and a lower-limit value, and output a detection signal when the reference signal is out of the range.

According to this structure, notification of occurrence of a malfunction is outputted in the form of the detection signal; therefore, it is possible to easily prompt replacement of the malfunctioning solid-state imaging device by a new solid-state imaging device.

Here, the plurality of photoelectric conversion units may be arranged in a matrix, the transfer path may include: a plurality of vertical transfer units provided so as to correspond to columns of said photoelectric conversion units, and each operable to transfer signal charges read out from said photoelectric conversion units in a corresponding one of the columns; and a horizontal transfer unit which transfers the signal charges transferred from said plurality of vertical transfer units, and the reference signal may be outputted from said output unit via at least one of said vertical transfer units and said horizontal transfer unit.

According to this structure, it is possible to easily detect a malfunction in the case where a malfunction is occurring in any point in the at least one vertical transfer unit and the horizontal transfer unit through which the reference signal is transferred.

Here, the generation unit may inject a reference charge corresponding to the reference signal into any one of said photoelectric conversion units.

According to this structure, it is further possible to detect a malfunction such as a malfunction of the photoelectric conversion unit and a trouble in readout of the photoelectric conversion unit.

Here, the generation unit may inject a reference charge corresponding to the reference signal into one of said photoelectric conversion units that is placed close to a most upstream position of one of the vertical transfer units that is connected to a position close to a most upstream position of said horizontal transfer unit.

According to this structure, the reference signal is transferred through the longest one of the transfer paths; therefore, it is possible to detect a malfunction that has occurred in any point in at least the longest path. In addition, the circuit scale of the generation unit can be limited to a minimum.

Here, the generation unit may inject a reference charge corresponding to the reference signal into one of said photoelectric conversion units that is placed close to a most upstream position of each of said vertical transfer units.

According to this structure, the reference signal is transferred through all of the transfer paths; therefore, it is possible to detect a malfunction in any point in the transfer paths. In other words, it is possible to detect a malfunction with respect to all the paths although the circuit scale of the generation unit is increased.

Here, the generation unit may inject a reference charge corresponding to the reference signal into at least one of said plurality of vertical transfer units at a position close to a most upstream position thereof.

Here, the generation unit may inject a reference charge corresponding to the reference signal into one of the vertical transfer units that is connected to a position close to a most upstream position of the horizontal transfer unit at a position close to a most upstream position thereof.

According to this structure, the reference signal is transferred through the longest one of the transfer paths composed of one of the vertical transfer units and the horizontal transfer unit; therefore, it is possible to detect a malfunction that has occurred in any point in at least the longest path. In addition, the circuit scale of the generation unit can be limited to a minimum.

Here, the generation unit may inject a reference charge corresponding to the reference signal into each of said vertical transfer units at a position close to a most upstream position thereof.

According to this structure, the reference signal is transferred through nearly all of the transfer paths; therefore, it is possible to detect a malfunction in any point in the transfer paths. In other words, it is possible to detect a malfunction with respect to nearly all of the paths although the circuit scale of the generation unit is increased.

Here, the generation unit may inject a reference charge corresponding to the reference signal into one of the photoelectric conversion units that is placed close to a most upstream position of at least one of the plurality of vertical transfer units.

According to this structure, the reference signal is transferred through, out of all the transfer paths, a path composed of the photoelectric conversion unit, the at least one vertical transfer unit, and the horizontal transfer unit; therefore, it is possible to detect a malfunction that has occurred in any point in this path including the photoelectric conversion unit. In addition, the circuit scale of the generation unit can be limited to a minimum.

Here, the plurality of photoelectric conversion units may be arranged in a matrix, the transfer path may include: a row selection unit which selects one row of said photoelectric conversion units; a column selection unit which selects one column of said photoelectric conversion units; and an output line provided for each column and which transfers the signal read out from one of the photoelectric conversion units that is in the selected row and in the selected column, and the reference signal may be outputted from said output unit via said output line.C12+may

According to this structure, it is possible to easily detect a malfunction in the case where a malfunction is occurring in any point in a path that includes at lease one of the output lines through which the reference signal is transferred.

Here, the generation unit may inject a reference charge corresponding to the reference signal into any one of said photoelectric conversion units.

According to this structure, it is further possible to detect a malfunction such as a malfunction of the photoelectric conversion unit and a trouble in readout of the photoelectric conversion unit.

Here, the generation unit may inject a reference charge corresponding to the reference signal into one of the photoelectric conversion units that is located in one of the rows that is selected last and in one of the columns that is selected last.

According to this structure, the reference signal is supplied to the photoelectric conversion element that is selected last; therefore, the reference signal is outputted only when scanning by the row selection unit and the column selection unit is carried out normally to the end, and detection of malfunction can be performed after normal scanning is verified. In addition, the circuit scale of the generation unit can be limited to a minimum.

Here, the generation unit may inject a reference charge corresponding to the reference signal into one of the photoelectric conversion units that is placed close to a most upstream position of each of at least one of said output lines.

According to this structure, the reference signal is supplied to the photoelectric conversion unit that is placed close to the most upstream position of the output line; therefore, it is possible to detect a malfunction in any point in the output line. In addition, in the case where the reference charge is injected into the photoelectric conversion unit that is placed close to the most upstream position of a single one of the output lines, the circuit scale of the generation unit can be limited to a minimum. Meanwhile, in the case where the reference charge is injected into the photoelectric conversion unit that is placed close to the most upstream position of each of the output lines, the circuit scale of the generation unit is increased, but the detection of malfunction is possible with respect to all the output lines.

Here, the photoelectric conversion unit or units to which the reference signal is supplied may be shielded from the light.

According to this structure, even if a system that includes the solid-state imaging device is not equipped with a mechanical shutter, the reference signal can be outputted properly.

Here, the solid-state imaging device may further includes a warning unit which issues a warning of malfunction to outside when the detection signal is outputted from the determination unit.

According to this structure, it is possible to prompt replacement of the solid-state imaging device quickly with the warning.

Here, when the determination unit has outputted the detection signal, said determination unit may instruct a power supply unit to stop supply of power to a part of said solid-state imaging device.

According to this structure, it is possible to prevent occurrence of a secondary malfunction that could be caused by continued supply of power to the malfunctioning solid-state imaging device.

Here, the solid-state imaging device may further includes: a shutter unit which controls the light incident on the plurality of photoelectric conversion units; and a control unit which controls the shutter unit to shut out the light, and control said generation unit to inject the reference signal into each of the plurality of photoelectric conversion units.

According to this structure, it is possible to detect a malfunction with respect to each of the plurality of photoelectric conversion units, and an abnormality in the transfer path from each of the plurality of photoelectric conversion units to the output unit. In other words, a nearly 100% malfunction detection rate is achieved, as the malfunction detection is possible with respect to not only an optical black area having a light-shielding film in a photosensitive surface but also an effective pixel area that does not have the light-shielding film.

Here, the control unit may control said shutter unit to shut out the light, and control said generation unit to inject the reference signal, immediately after power of said solid-state imaging device is turned on, or immediately before the power thereof is turned off, or on both occasions.

According to this structure, a time delay, since power-on until the start of imaging, arises, but it is possible to detect a malfunction that has occurred immediately before activation and a malfunction that has occurred during imaging, which is efficient for the user.

Here, the solid-state imaging device may be mounted on a vehicle, and the control unit may control the shutter unit to shut out the light and control the generation unit to inject the reference signal at least once when a speed of the vehicle is less or equal to a threshold.

According to this structure, the imaging is interrupted for an instant when the speed is slower than the threshold, but it is possible to detect early a malfunction that has occurred while the vehicle is traveling or unmoving.

Here, the control unit may control the shutter unit to shut out the light periodically, and control said generation unit to inject the reference signal.

According to this structure, the imaging is interrupted for an instant periodically, but it is possible to detect, without fail, a malfunction within a certain period of time after the occurrence of the malfunction.

Here, the generation unit may include: a plurality of reference signal generation units corresponding to the plurality of photoelectric conversion units; and a plurality of selection units corresponding to the plurality of photoelectric conversion units, and the solid-state imaging device further comprises a selection control unit operable to control the selection units when imaging, each of the reference signal generation units generates the reference signal, and each of said selection units may be provided between the photoelectric conversion unit and the readout unit, and may select one of the signal generated by said photoelectric conversion unit and the reference signal generated by the reference signal generation unit.

According to this structure, there is no need to shield the plurality of photoelectric conversion units from the light, and selection by the selection units of the reference signals at the time of imaging, such as immediately before or immediately after the imaging, allows detection of occurrence of a malfunction in the path from each of the selection units through the corresponding readout unit and transfer path to the output unit.

Here, the selection control unit may control the selection units to alternately select, by a predetermined number, the signals generated by said photoelectric conversion units and the reference signals generated by the reference signal generation units.

According to this structure, video signal processing and malfunction detection can be performed in a single imaging operation on a desired area within the effective pixel area and the remaining area, respectively. Flexibility in system design with respect to the desired area can be improved. Further, it is possible to detect, simultaneously with imaging, the occurrence of a malfunction in the path from each of the selection units through the corresponding readout unit and transfer path to the output unit.

Here, the predetermined number may be one of the number of photoelectric conversion units corresponding to one, one row, a multiple of the number of photoelectric conversion units corresponding to one row, the number of photoelectric conversion units corresponding to one column, a multiple of the number of photoelectric conversion units corresponding to one column, the number of the plurality of photoelectric conversion units, and a multiple of the number of the plurality of photoelectric conversion units.

According to this structure, it is possible to detect, simultaneously with imaging, the occurrence of a malfunction in the path from each of the selection units through the corresponding readout unit and transfer path to the output unit.

Here, the number of the plurality of reference signal generation units may be equal to the number of the plurality of photoelectric conversion units, and each of the reference signal generation units is connected to one of the selection units.

According to this structure, a nearly 100% malfunction detection rate is achieved, as the malfunction detection is possible with respect to not only the optical black area having the light-shielding film in the photosensitive surface but also the effective pixel area that does not have the light-shielding film.

Here, the number of the plurality of reference signal generation units may be less than the number of the plurality of photoelectric conversion units, and at least one of the reference signal generation units is connected to two or more of the selection units.

According to this structure, a nearly 100% malfunction detection rate is achieved, and the increase in the circuit scale can be reduced.

Here, each of the reference signal generation units may be connected to N (N is two or more) selection units.

According to this structure, since each reference signal generation unit is shared by N selection units, the increase in the circuit scale can be reduced.

Here, the selection control unit may selectively control a first operation in which the selection units are caused to select the signals generated by said photoelectric conversion units for imaging while not causing the selection units to select the reference signals, and a second operation in which the selection units are caused to alternately select, by a predetermined number, the reference signals and the signals generated by the photoelectric conversion units for imaging.

According to this structure, concurrent use of the imaging operation and a malfunction detection operation is possible, and early detection of a malfunction is possible.

Here, the selection control unit may use operation clocks having the same speed in the first operation and the second operation.

According to this structure, there is no need to increase the speed of the operation clock, and the concurrent use of the imaging operation and the malfunction detection operation is possible.

Here, the selection control unit may use, in the second operation, an operation clock that is faster than an operation clock used in the first operation.

According to this structure, in a solid-state imaging device that is capable of increasing the speed of the operation clock, the concurrent use of the imaging operation and the malfunction detection operation is possible, and a frame rate equivalent to that in a regular imaging operation is achieved.

Here, the selection control unit may further selectively control a third operation in which the selection units are caused to select the reference signals for imaging while the selection units are not allowed to select the signals generated by the photoelectric conversion units.

According to this structure, the malfunction detection operation can be performed independently of imaging.

Here, the plurality of reference signal generation units may include a first signal generation unit which generates a first fixed level as the reference signal, and a second signal generation unit which generates a second fixed level as the reference signal.

According to this structure, two types of reference signals are used for the malfunction detection operation, and therefore, it is possible to detect a malfunction of the level being fixed by chance at the first or second fixed level.

Here, the first signal generation units and the second signal generation units may be aligned systematically with respect to a row direction of said photoelectric conversion units.

According to this structure, two types of reference signals are used for the malfunction detection operation, and therefore, it is possible to detect a malfunction of the level being fixed by chance at the first or second fixed level.

Here, the first signal generation units and the second signal generation units may be aligned systematically with respect to a column direction of the photoelectric conversion units.

According to this structure, it is possible to detect a malfunction more reliably when the order in which the pixel units are read out is a row-direction order.

Here, the solid-state imaging device may further includes: a first determination unit which determines whether the reference signal outputted from the output unit falls within a normal range of the first fixed level, which is between an upper-limit value and a lower-limit value; a second determination unit which determines whether the reference signal outputted from the output unit falls within a normal range of the second fixed level, which is between an upper-limit value and a lower-limit value; and an abnormality determination unit which outputs a detection signal when abnormality is detected based on alignment of the first signal generation units and the second signal generation units, and determination results obtained by the first and second determination units.

In addition, a camera according to the present invention includes: M (M is two or more) solid-state imaging devices; a determination unit which determines malfunction based on reference signals outputted from said M solid-state imaging devices; a signal processing unit which processes an output signal of m (m is one or more) solid-state imaging devices among the M solid-state imaging devices; and a switching control unit, when malfunction in any of said m solid-state imaging devices has been detected, which switches a source of output to said signal processing unit from said solid-state imaging device in which a malfunction is detected to one of said solid-state imaging devices in which no malfunction is detected.

According to this structure, recovery can be quickly achieved when a malfunction has been detected, and it is possible to eliminate a period in which unusability is imposed because of repair requested by a user.

Here, the switching control unit may shift the other solid-state imaging devices than said m solid-state imaging devices to an inactive state, and when malfunction in one of the m solid-state imaging devices has been detected, shift said solid-state imaging device in which a malfunction is detected to the inactive state, and shift one of the solid-state imaging devices in which no malfunction is detected to an active state.

Here, the switching control unit may switch between the active state and the inactive state by controlling supply of power to the solid-state imaging device.

Here, the switching control unit may switch between the active state and the inactive state by controlling a driving signal sent to the solid-state imaging device.

Here, the switching control unit may switch between the active state and the inactive state by starting or stopping a driving signal sent to the solid-state imaging device while supplying power to the M solid-state imaging devices at all times.

According to this structure, quick switching from the inactive state to the active state is made possible by supplying power at all times.

Here, the switching control unit may switch between the active state and the inactive state by making a level of the driving signal sent to the solid-state imaging device fixed.

Here, the camera may further includes at least one optical system operable to disperse incident light to two or more of the solid-state imaging devices.

The same units as those described above are also contained in a camera, an automobile, and a monitoring device according to the present invention.

### Effects of the Invention

With a solid-state imaging device according to the present invention, it is easy to detect a malfunction in the solid-state imaging device, such as an abnormality in a transfer path, using the reference signal outputted. Accordingly, in the case where occurrence of a malfunction in the solid-state imaging device is detected after shipment, it is possible to replace, in a system that includes the solid-state imaging device, the malfunctioning solid-state imaging device with a new solid-state imaging device to recover a quality level. Therefore, a long lifespan of the system can be fulfilled even when the system is in a severe usage environment.
Thus, even when the solid-state imaging device has a shorter life cycle than that of the system, it is possible to fulfill the lifespan demanded for the system, and the quality level can be easily maintained by replacement even under a severe usage environment.

In addition, it is possible to avoid the increase in costs, and it is easy to prompt replacement of the malfunctioning solid-state imaging device by a new solid-state imaging device.

### Brief Description of Drawings

FIG. 1 is a block diagram illustrating a structure of a camera system according to a first embodiment.
FIG. 2A is a side view of an automobile for illustrating examples of camera positions in the case where they are mounted on a vehicle.
FIG. 2B is a front view of the automobile for illustrating the examples of the camera positions.
FIG. 2C is a top view of the automobile for illustrating the examples of the camera positions.
FIG. 3 is a block diagram illustrating a structure of a solid-state imaging element.
FIG. 4 is a diagram illustrating an output waveform corresponding to a pixel unit P1.
FIG. 5 is a diagram illustrating an output waveform corresponding to a pixel unit B1.
FIG. 6A is a diagram illustrating an output waveform corresponding to a pixel unit S1.
FIG. 6B is a diagram illustrating an output waveform corresponding to the pixel unit S1 when a malfunction has occurred.
FIG. 6C is a diagram illustrating an output waveform corresponding to the pixel unit S1, when a malfunction has occurred.
FIG. 7 is a block diagram illustrating an exemplary detailed structure of a determination unit.
FIG. 8 is a block diagram illustrating a detailed structure of the pixel unit S1.
FIG. 9 is a time chart for generating a reference signal in the pixel unit S1.
FIG. 10 is a diagram illustrating potentials of an electrode IS, an electrode IG, and a photodiode.
FIG. 11 is a diagram illustrating an exemplary display.
FIG. 12 is a block diagram illustrating an exemplary variation of the camera system.
FIG. 13 is a block diagram illustrating a structure of a solid-state imaging element according to a second embodiment.
FIG. 14 is a block diagram illustrating a structure of a solid-state imaging element according to a third embodiment.
FIG. 15A is a circuit diagram illustrating a detailed structure of a pixel unit S3.
FIG. 15B is a circuit diagram illustrating a detailed structure of a pixel unit S3s.
FIG. 16 is a circuit diagram illustrating a structure of an exemplary variation of the solid-state imaging element.
FIG. 17 is a circuit diagram illustrating a structure of an exemplary variation of the solid-state imaging element.
FIG. 18 is a block diagram illustrating a structure of a camera system according to a fourth embodiment.
FIG. 19 is a block diagram illustrating a structure of a solid-state imaging element.
FIG. 20 is a block diagram illustrating a structure of another solid-state imaging element.
FIG. 21A is a diagram illustrating a first timing example of malfunction detection.
FIG. 21B is a diagram illustrating a second timing example of the malfunction detection.
FIG. 21C is a diagram illustrating a third timing example of the malfunction detection.
FIG. 22A is a diagram illustrating a fourth timing example of the malfunction detection.
FIG. 22B is a diagram illustrating a fourth timing example of the malfunction detection.
FIG. 23 is a block diagram illustrating a structure of a camera system according to a fifth embodiment.
FIG. 24 is a block diagram illustrating a pixel unit in the solid-state imaging element.
FIG. 25A is a diagram illustrating a first driving example in which the reference signals are outputted.
FIG. 25B is a diagram illustrating a second driving example in which the reference signals are outputted.
FIG. 25C is a diagram illustrating a third driving example in which the reference signals are outputted.
FIG. 25D is a diagram illustrating another driving example in which the reference signals are outputted.
FIG. 26 is a diagram illustrating a first driving example of the solid-state imaging element.
FIG. 27 is a diagram illustrating a second driving example of the solid-state imaging element.
FIG. 28 is a circuit diagram illustrating a configuration of pixel units according to a sixth embodiment.
FIG. 29 is a circuit diagram illustrating another configuration of the pixel units.
FIG. 30A is a block diagram illustrating a structure of a MOS solid-state imaging element according to a seventh embodiment.
FIG. 30B is a block diagram illustrating an exemplary variation of the AMOS solid-state imaging element.
FIG. 31 is a block diagram illustrating a structure of a CCD solid-state imaging element.
FIG. 32 is a block diagram illustrating a structure of a determination unit.
FIG. 33 is a block diagram illustrating a structure of a camera according to an eighth embodiment.

### Numerical References

2 vertical transfer unit
3 horizontal transfer unit
4 output amplifier
5 reference signal generation unit
6 vertical scanning unit
7 horizontal scanning unit
8 output amplifier
11, 21, 32 solid-state imaging device
12 driving unit
13 signal processing unit
14 determination unit
20 display unit
30 display control unit
40 power supply unit
101 camera
S1, S3, B1, B3, P1, P3 pixel unit
Tr1 transfer transistor
Tr2 reset transistor
Tr3 output transistor
Tr4 selection transistor
Tr5 injection transistor
R1 resistor

### Best Mode for Carrying Out the Invention

### (First Embodiment)

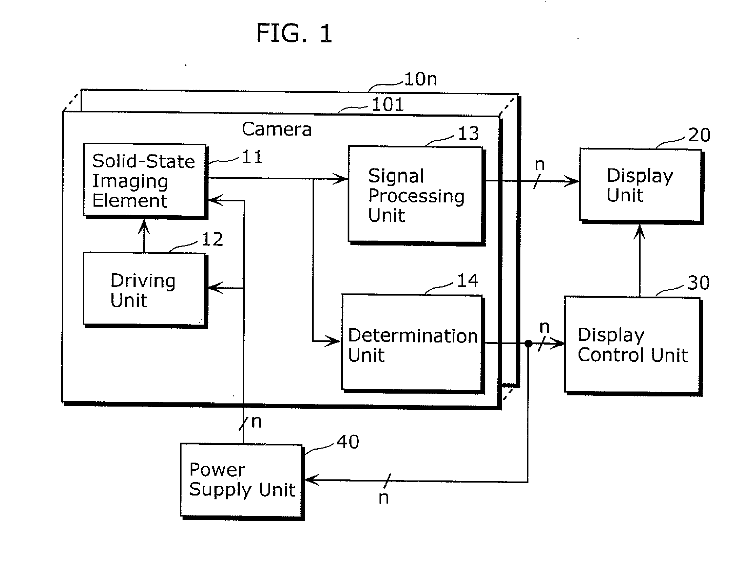

FIG. 1 is a block diagram illustrating a structure of a camera system according to a first embodiment. A camera system in this figure includes n cameras 101 to 10n, a display unit 20, a display control unit 30, and a power supply unit 40. Each of the cameras includes a solid-state imaging element 11, a driving unit 12, a signal processing unit 13, and a determination unit 14.

The solid-state imaging element 11 outputs signals of a plurality of pixels in accordance with various driving signals supplied from the driving unit 12. The signals of the plurality of pixels include a constant-level reference signal used for detection of malfunction, i.e., determination of occurrence of a malfunction. The driving unit 12 outputs the various driving signals to drive the solid-state imaging element 11. The signal processing unit 13 generates an image from the signals of the plurality of pixels outputted from the solid-state imaging element 11. The determination unit 14 determines whether or not the level of the reference signal outputted from the solid-state imaging element 11 is valid to detect a malfunction in the solid-state imaging element 11, such as an abnormality in a transfer path. Thus, when a malfunction has occurred in the solid-state imaging element 11, the camera 101 outputs a detection signal indicative thereof. The other cameras also have the same structure.

The display unit 20 displays the image outputted from each camera as appropriate, and, when the detection signal indicative of the occurrence of malfunction in any camera has been received, displays a message indicating that a malfunction has occurred in that camera and prompting inspection or replacement of the camera.

The display control unit 30 controls displaying of the display unit 20, and in particular, monitors whether the detection signal has been inputted from any of the n cameras or not. When the detection signal is inputted from any of the cameras, the display control unit 30 controls the display unit 20 to display the aforementioned message, and outputs a message via an in-vehicle loudspeaker or controls a warning lamp to be illuminated or flash on and off to provide a warning indicating the occurrence of malfunction in the camera, thereby prompting the inspection or replacement.

In the case where the detection signal is inputted from any of the cameras, the power supply unit 40 stops supplying power to the solid-state imaging element 11 or driving unit 12 of that camera. This is in order to prevent irregular operation in the malfunctioning solid-state imaging element 11 from undesirable effect to the parts in the cameral system which are normally operating.

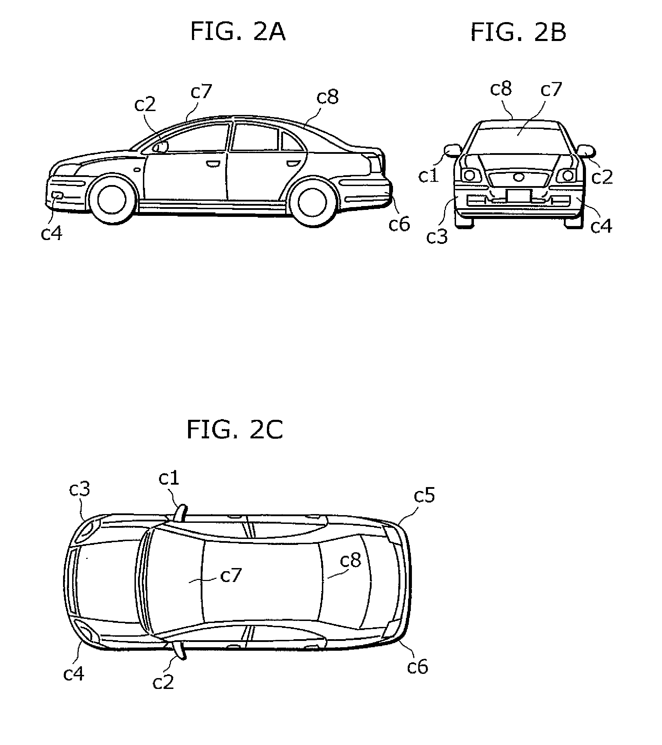

FIGS. 2A to 2C are a side view, a front view, and a top view of an automobile illustrating examples of positions at which the cameras are placed on the automobile in the case where the camera system of FIG. 1 is installed on the automobile. FIGS. 2A to 2C illustrate positions c1 to c8 at which the cameras 101 to 108 are placed on the automobile in the case where the cameras 101 to 10n as shown in FIG. 1 are eight cameras 101 to 108. The positions at which the cameras 101 to 108 are placed on the automobile include: a lower or front part c1 of a right door mirror; a lower or front part c2 of a left door mirror; a right-hand side c3 of a front bumper; a left-hand side c4 of the front bumper; a right-hand side c5 of a rear bumper; a left-hand side c6 of the rear bumper; a rearview mirror position c7; and an upper middle portion c8 of a rear glass. Any other positions that are blind spots for a driver or from which the object of monitoring or the like can be photographed are also adoptable, such as a center of the front bumper, a right- or left-hand side or center of a front of a roof, and so on.

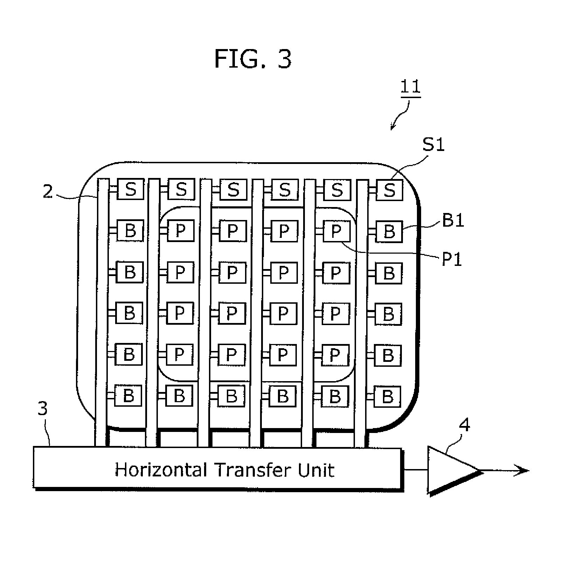

FIG. 3 is a block diagram illustrating a structure of the solid-state imaging element 11 as shown in FIG. 1. In FIG. 3, the solid-state imaging element 11 includes: a plurality of pixel units; a plurality of vertical transfer units 2, which are provided so as to correspond to columns of the pixel units and used to transfer signal charges read out from the pixel units in the respective columns; a horizontal transfer unit 3 for transferring the signal charges transferred from the plurality of vertical transfer units 2; and an output amplifier 4 for converting the signal charges outputted from the horizontal transfer unit 3 into a voltage signal.

The plurality of pixel units are made up of three types of pixel units. A plurality of pixel units P1 labeled P in the figure are normal pixel units which are not shielded from light, and generate a signal corresponding to the quantity of incident light. A plurality of pixel units B1 labeled B each have the same structure as that of the pixel unit P1 but are shielded from the light, and thus output a so-called optical black pixel. A plurality of pixel units S1 labeled S each have the same structure as that of the pixel unit P1 and additionally include a reference charge injection unit, and, being shielded from the light, output a reference charge. The quantity of this reference charge is a quantity that allows the reference charge to become the aforementioned reference signal when outputted via the output amplifier 4. In FIG. 3, the pixel units B1 and the pixel units S1 are shielded from the light; however, in the case where the camera has a mechanical shutter, the pixel units S1 need not be shielded from the light. Note that in FIG. 3, the pixels S1 that have the reference charge injection units are arranged at the most upstream pixel positions in each of the vertical transfer units 2. Accordingly, the reference signals are transferred in all the transfer paths, which makes it easy to detect a malfunction no matter which part of the transfer paths suffers the malfunction. In this case, however, a circuit scale is enlarged because the pixels S1 corresponding to one row include the reference charge injection units. Alternatively, the pixel S1 having the reference charge injection unit may be arranged only at the most upstream position in the vertical transfer 2 that is connected to the most upstream position of the horizontal transfer unit 3. In this case, the reference signal is transferred in the longest one of the transfer paths, which is made up of a single one of the vertical transfer units 2 and the horizontal transfer 3; accordingly, it is possible to detect a malfunction that has occurred at any part of the longest path at least, and a malfunction that has occurred before the output of the reference signal, which is outputted last. Moreover, a circuit scale of the reference charge injection unit can be limited to a minimum. Here, the pixel S1 may be arranged in only at least one of the vertical transfer units 2.

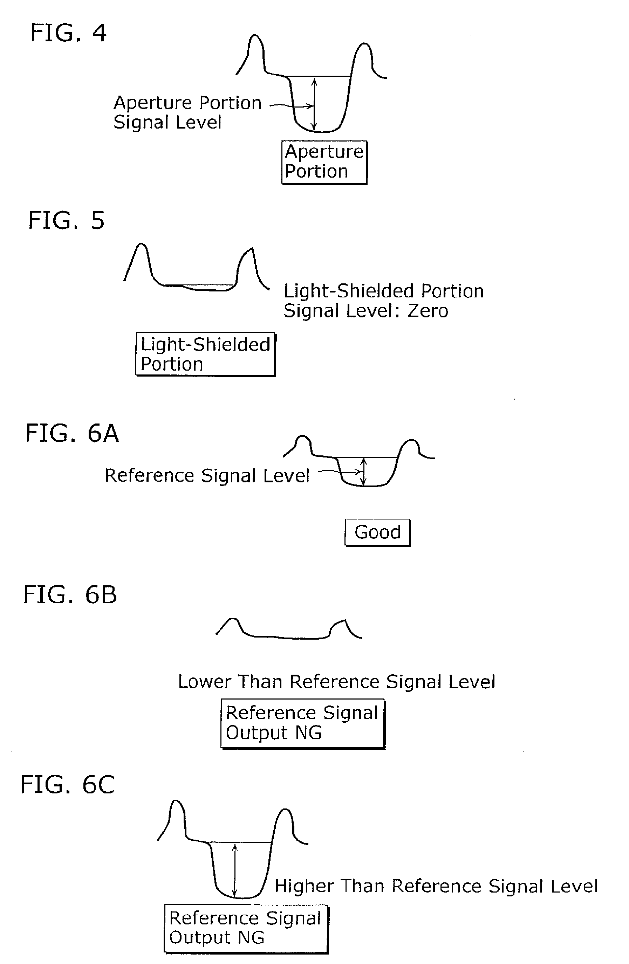

FIG. 4 is a diagram illustrating an output waveform of the output amplifier 4, the output waveform corresponding to a signal charge from the pixel unit P1. While this figure shows a maximum-level output waveform obtained when the signal charge has been saturated in the pixel unit P1, a signal level caused by the signal from the pixel unit P1 takes a value from zero to a maximum level in accordance with the quantity of the incident light.

FIG. 5 is a diagram illustrating an output waveform of the output amplifier 4, the output waveform corresponding to a signal charge from the pixel unit B1. In this figure, since the signal charge from the pixel unit B1 is nearly zero, the signal level of the output waveform is also nearly zero.

FIG. 6A is a diagram illustrating an output waveform corresponding to the pixel unit S1. In this figure, a signal charge in the pixel unit S1 is injected from a reference signal generation unit. This output waveform represents a signal level of the reference signal, and the quantity of the charge injected from the reference signal generation unit is determined such that this signal level takes a value intermediate between zero and the maximum level.

FIG. 6B and FIG. 6C are diagrams illustrating output waveforms corresponding to the pixel unit S1 when a malfunction has occurred. The output waveform shown in FIG. 6B represents a signal level lower than that of the reference signal, whereas the output waveform shown in FIG. 6C represents a signal level higher than that of the reference signal. Both of these examples indicate that the reference signal has not been transferred from the pixel unit S1 to the output amplifier 4 normally. In other words, they indicate that a point in a transfer path from the pixel unit S1 to the output amplifier 4 suffers a malfunction, and thus is malfunctioning.

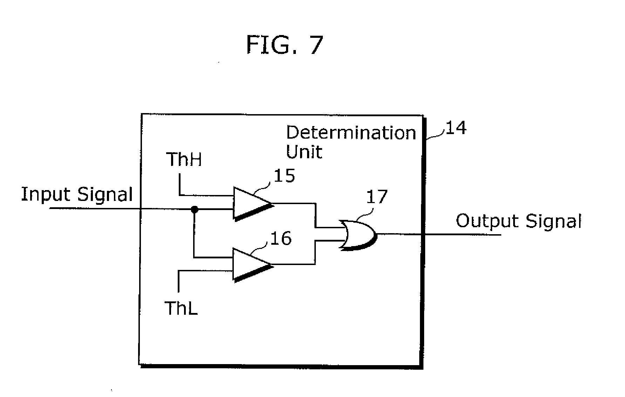

FIG. 7 is a block diagram illustrating an exemplary detailed structure of the determination unit 14. In this figure, the determination unit 14 includes comparators 15 and 16 and an OR circuit 17. An input signal is a signal corresponding to the pixel unit S1 and outputted from the output amplifier 4. The comparator 15 compares the input signal with an upper-limit value ThH, and, when the input signal is greater than the upper-limit value, outputs "1". The comparator 16 compares the input signal with a lower-limit value ThL, and, when the input signal is lower than the lower-limit value, outputs "1". The OR circuit 17 outputs "1" when the input signal falls outside the range between the upper-limit value ThH and the lower-limit value ThL. This output signal is the detection signal indicative of the occurrence of malfunction.

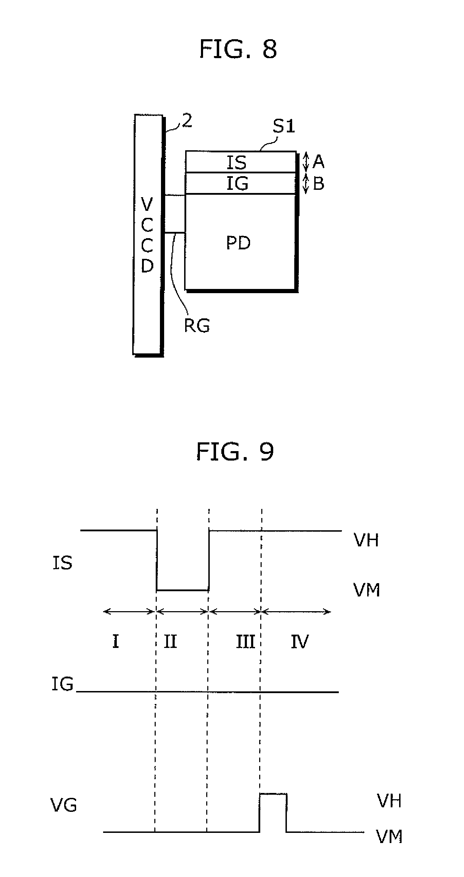

FIG. 8 is a block diagram illustrating a detailed structure of the pixel unit S1. This figure illustrates the pixel unit S1, the vertical transfer unit 2, and a readout gate RG for reading out the charge from the pixel unit S1 to the vertical transfer unit 2. The pixel unit S1 includes an IS electrode and an IG electrode in addition to a photodiode PD. The IS electrode is an electrode for supplying the charge to be injected, and as shown in FIG. 9, a negative pulse that changes from a voltage VH to a voltage VM is applied thereto. Here, the voltage VH is a voltage higher than the voltage VM. The IG electrode is an electrode for making the charge to be injected supplied from the IS electrode even so as to have a constant charge quantity, and as shown in FIG. 9, a constant voltage is applied thereto at all times.

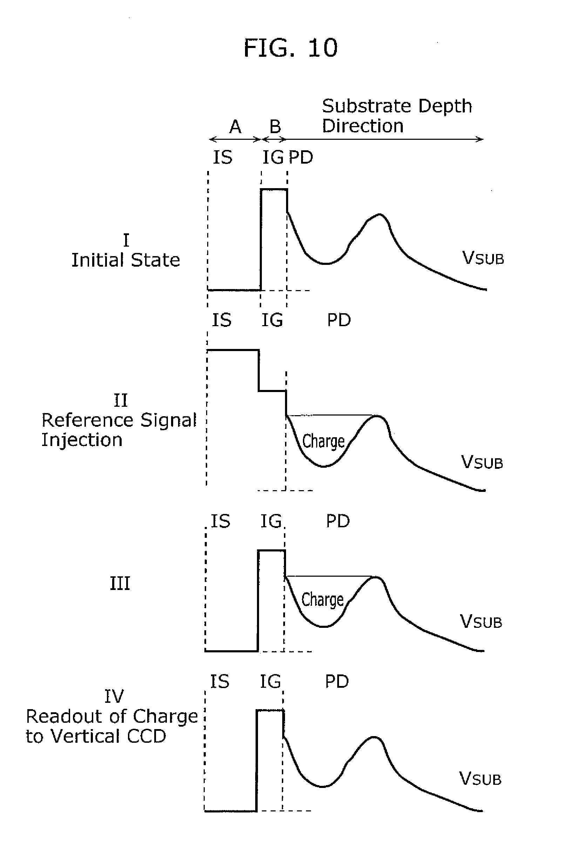

FIG. 9 is a time chart illustrating the voltages of the IS electrode and the IG electrode when the charge is injected into the pixel unit S1. FIG. 10 is a diagram illustrating potentials of the electrode IS, the electrode IG, and the photodiode. In FIG. 10, sections A and B correspond to a width A of the IS electrode and a width B of the IG electrode as shown in FIG. 8. A section to the right of section B represents the potential in the photodiode PD in a direction from a substrate surface to a substrate depth. Note that a substrate bias voltage VSUB is applied to a substrate, and a potential OBF (overflow barrier) is formed in the photodiode PD. In an initial-state (normal-state) section I as shown in FIG. 9 and FIG. 10, the potential of the IG electrode is higher than the potential of the IS electrode; therefore, the injection of the charge does not occur. In a reference-signal-injection section II, the potential of the IG electrode is lower than the potential of the IS electrode; therefore, the charge is injected from the IS electrode into the photodiode PD. In a next section III, the injected charge is stored in the photodiode PD. In a section IV, a high-voltage pulse (from the voltage VM to the voltage VH) is applied to the readout gate RG, so that the charge is read out from the pixel unit S1 to the vertical transfer unit 2 via the readout gate RG.

In the above-described manner, the charge is injected from the IS electrode into the photodiode PD in the pixel unit S1, and, in turn, is read out to the vertical transfer unit 2. Note that although, in FIG. 10, the quantity of the charge injected into the photodiode PD is a saturation charge quantity, the quantity of the injected charge may be arbitrarily set, e.g., at a value intermediate between zero charge and the saturation charge quantity, by setting the potential of the IG electrode at a potential lower than a peak of the OBF.

The injection of the charge into the pixel unit S1 as illustrated in FIG. 10 may be carried out either in a regular imaging mode of the solid-state imaging element 11 or in a mode in which only the readout of the reference signal is carried out. This driving is performed by the driving unit 12.

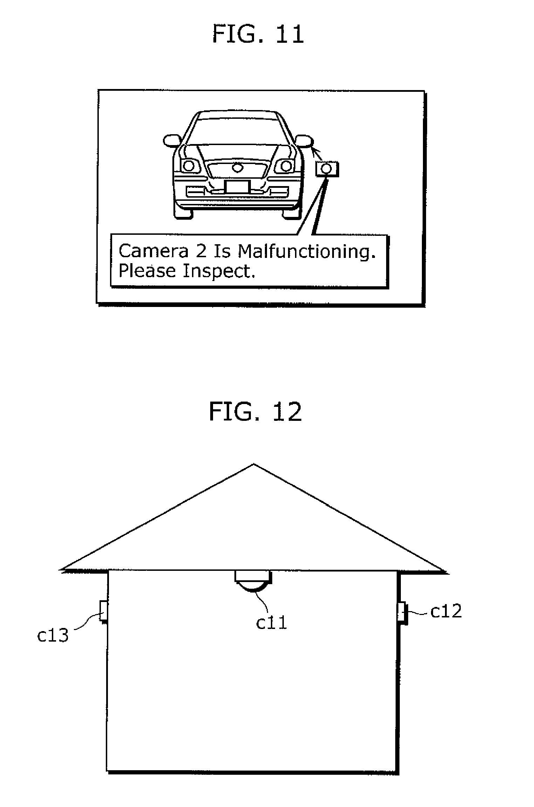

FIG. 11 is a diagram illustrating an exemplary display by the display unit 20. This figure shows an exemplary display by the display unit 20 in the case where the detection signal indicative of the occurrence of malfunction has been outputted from any of the cameras. In this figure, an icon representing the malfunctioning camera and a warning message "Camera 2 is malfunctioning. Please inspect." are displayed together with a picture of the automobile. At this time, the icon representing the malfunctioning camera may be displayed so as to blink on and off, or displayed in a striking color. Alternatively, the warning message may be outputted in audio form. The warning lamp may be illuminated or caused to flash on and off. The display unit 20 may also be used as a display for a car navigation system.

FIG. 12 is a block diagram illustrating an exemplary variation of the camera system. In this figure, the camera system is applied as a monitoring device in a house. A position c11 at which a camera is placed is a ceiling, and this camera is rotatable so that a 360 degree imaging area will be secured. This makes it possible to monitor a person who needs care. A position c12 at which a camera is placed is a position above an entrance. A c12 at which a camera is placed is a position above a window or a bathroom. Examples of other possible positions for placement include a roof, an attic, and a position under a floor, and stricter security will thus be achieved.

Note that, needless to say, the monitoring device can be applied to not only the house but also a company building, a station building, a school, a public office, and so on.

Note that although, in the present embodiment, the reference charge injection unit is arranged only at the most upstream position in the vertical transfer 2 that is connected to the most upstream position of the horizontal transfer unit 3, this only need be arranged close to the most upstream position.

Also note that, in the case where the horizontal transfer unit 3 has a thousand transfer stages, the reference charge injection unit may be arranged in any of the first (most upstream) several tens of stages, which also achieve effects similar to those of the present embodiment.

### (Second Embodiment)

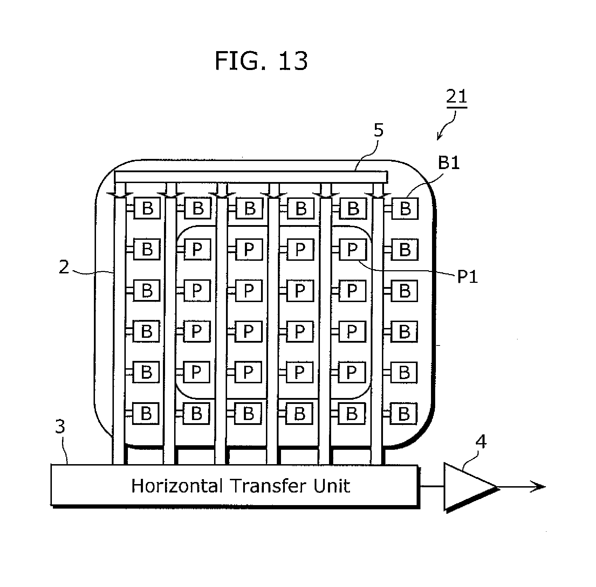

A structure of a camera system according to the present embodiment is nearly the same as that of FIG. 1, but different in that a solid-state imaging element 21 as illustrated in FIG. 13 displaces the solid-state imaging element 11. The following description focuses on dissimilar points while omitting descriptions of identical points.

FIG. 13 is a block diagram illustrating a structure of the solid-state imaging element 21 according to a second embodiment. The solid-state imaging element 11 in this figure is different from the solid-state imaging element 11 as illustrated in FIG. 3 in that a reference signal generation unit 5 is additionally included and all the pixel units 51 are replaced by the pixel units B1.

The reference signal generation unit 5 injects a reference charge corresponding to the reference signal into the most upstream stage of each of the vertical transfer units 2. This eliminates the need for the charge injection units of the pixel units S1. The reference signal generation unit 5 has the IS electrode and the IG electrode as illustrated in FIG. 8, and injects the reference charge into the plurality of vertical transfer units 2 simultaneously. Details of the reference signal generation unit 5 are disclosed in Japanese Unexamined Patent Application Publication No. 2004-364235 (FIG. 3), for example.

According to this arrangement, the reference charge is not injected into the pixel units but to the vertical transfer units 2. Because the reference charge is transferred in all transfer paths except for the pixel units, the detection of a malfunction is possible at all points in the transfer paths.

Note that the reference signal generation unit 5 may inject the reference charge into only one of the vertical transfer units 2. In this case, a circuit scale of the reference signal generation unit 5 can be reduced. Also note that the reference signal generation unit 5 may inject the reference charge into only the vertical transfer unit 2 that is connected to the most upstream position of the horizontal transfer unit 3.

Also note that, referring to FIG. 8 described above and FIG. 13, even if variations occur in the quantity of the injected reference charges that generate the reference signals, it is possible to easily maintain/output a constant signal level by controlling Vsub.

### (Third Embodiment)

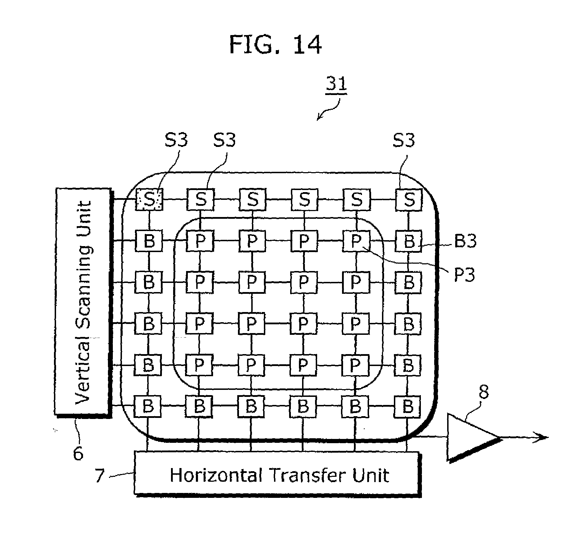

A structure of a camera system according to the present embodiment is nearly the same as that of FIG. 1, but different in that a solid-state imaging element 31 as illustrated in FIG. 14 displaces the solid-state imaging element 11. The following description focuses on dissimilar points while omitting descriptions of identical points.

FIG. 14 is a block diagram illustrating a structure of the solid-state imaging element 31 according to a third embodiment. The solid-state imaging element 31 in this figure includes: a plurality of photoelectric conversion units arranged in a matrix; a vertical scanning unit 6 for selecting rows of the photoelectric conversion units sequentially; a horizontal scanning unit 7 for selecting columns of the photoelectric conversion units sequentially; and an output amplifier 8 for outputting signals via an output line that is provided for each column and transfers a signal read out from the photoelectric conversion unit in the selected row and in the selected column.

The plurality of pixel units are made up of three types of pixel units. A plurality of pixel units P3 labeled P in the figure are normal pixel units which are not shielded from the light, and generate the signal corresponding to the quantity of the incident light. A plurality of pixel units B3 labeled B each have the same structure as that of the pixel unit P3 but are shielded from the light, and thus output the so-called optical black pixel. A plurality of pixel units S3 labeled S each have the same structure as that of the pixel unit P3 and additionally include the reference charge injection unit, and, being shielded from the light, output the reference charge. The quantity of this reference charge is a quantity that allows the reference charge to become the aforementioned reference signal when outputted via the output amplifier 8. In FIG. 14, the pixel units B3 and the pixel units S3 are shielded from the light; however, in the case where the camera has the mechanical shutter, the pixel units S3 need not be shielded from the light. Also note that although, in FIG. 14, the pixels S3 that have the reference charge injection units are provided as pixels in the top row, they may be provided as pixels in the bottom row. The pixels S3 may be provided in a row that is selected last by the vertical scanning unit 6. In this case, the reference signals are outputted from the pixel units S3 in the row that is selected last; therefore, the reference signals are outputted only when scanning by the vertical scanning unit 6 is carried out normally to the end, and the detection of malfunction can be performed after normal vertical scanning is verified. In addition, since the reference signals are outputted sequentially in a final scanning by the horizontal scanning unit 7, it is possible to check whether a horizontal scanning has been performed normally and perform the detection of malfunction at the same time.

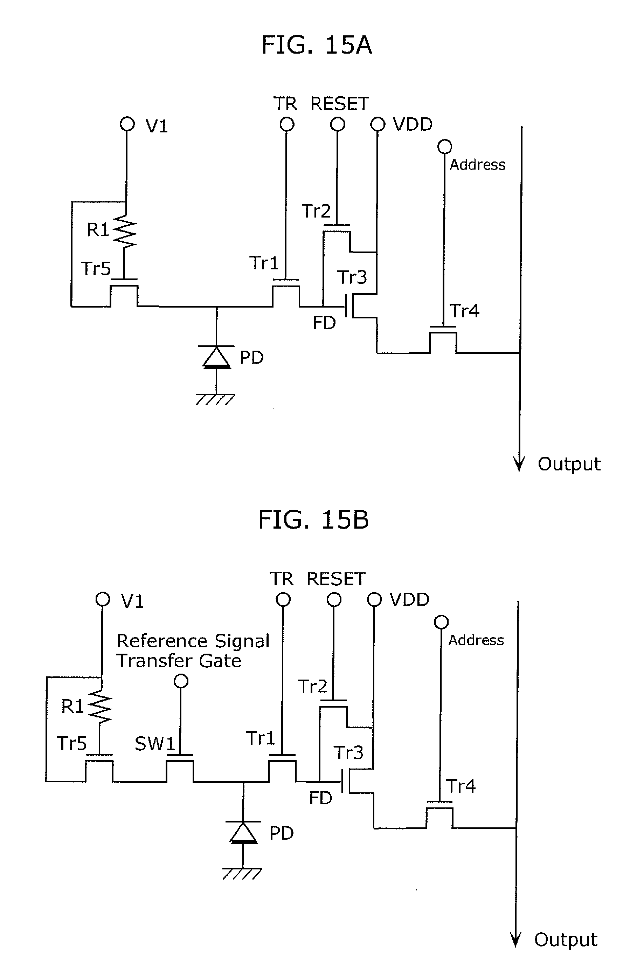

FIG. 15A is a circuit diagram illustrating a detailed structure of the pixel unit S3. In this figure, the pixel unit S3 includes the photodiode PD, a transfer transistor Tr1, a floating diffusion layer FD, a reset transistor Tr2, an output transistor Tr3, a selection transistor Tr4, a resistor R1, and an injection transistor Tr5. This circuit structure is the same as that of the pixel unit P3 except for the resistor R1 and the injection transistor Tr5. In other words, the pixel unit S3 is different from the pixel unit P3 in that it additionally includes the resistor R1 and the injection transistor Tr5.

The resistor R1 and the injection transistor Tr5 constitutes the reference charge injection unit. Since a first voltage is applied to a gate of the injection transistor Tr5 by the resistor R1, a second voltage is outputted to a drain thereof. This second voltage is set at a value that allows the charge quantity of the reference charge to be injected into the photodiode PD. Application of this second voltage to the photodiode PD results in storage of the reference charge in the photodiode PD. Note that the second voltage is set by a voltage V1, a resistance of the resistor R1, and the first voltage. The voltage V1 may either be set at a fixed value (e.g., VDD), or applied as a pulse only at the time of charge injection.

The reference charge stored in the photodiode PD is transferred to the floating diffusion layer FD when the transfer transistor Tr1 is turned on by a transfer signal TR. Before this transfer, the floating diffusion layer FD is reset to a potential VDD as a result of the reset transistor Tr2 being turned on by a reset signal RESET. After the resetting of the floating diffusion layer FD, the reference charge is transferred from the photodiode PD to the floating diffusion layer FD via the transfer transistor Tr1. Further, the output transistor Tr3 converts the charge in the floating diffusion layer FD into a voltage. The output transistor Tr3 outputs the converted voltage to the output line when the selection transistor Tr4 is selected by the vertical scanning unit 6. This voltage outputted is outputted via the output amplifier 8 as the reference signal.

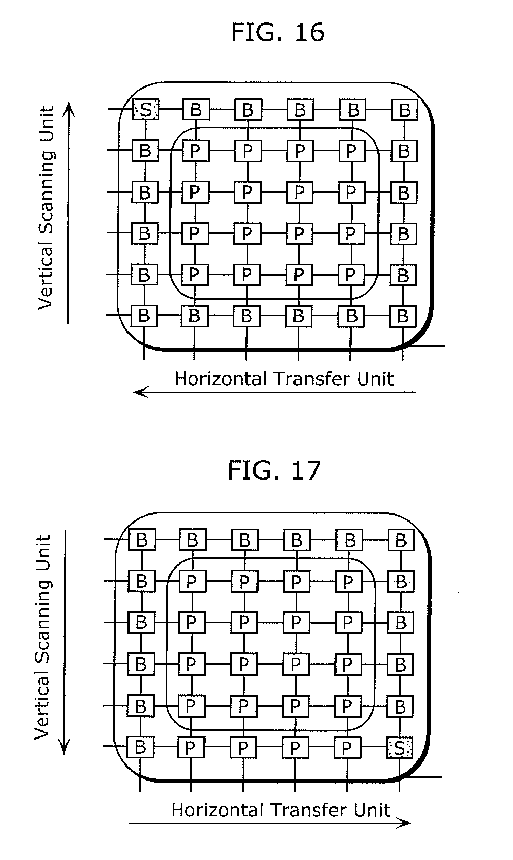

FIG. 16 and FIG. 17 are circuit diagrams illustrating structures of exemplary variations of the solid-state imaging element 31. In both FIG. 16 and FIG. 17, the number of pixels S3 that have the reference charge injection unit is only one, and it is provided at a pixel position of an intersection of the row that is selected last and the column that is selected last. In this case, the reference signal is outputted from the pixel that is selected last; therefore, the reference signal is outputted only when the scanning by the vertical scanning unit 6 and the horizontal scanning unit 7 is carried out normally to the end, and the detection of malfunction can be performed after normal scanning is verified. Moreover, because the number of pixel units S3 is one, increase in the circuit scale can be limited to a minimum.

Note that the pixel unit S3 may be provided at a pixel position of the most upstream (i.e., farthest from the output amplifier 8) position of at least one output line. In this case, the reference signal is outputted from the pixel unit S3 placed at the most upstream position of the output line; therefore, it is possible to detect a malfunction at any point in the output line. Moreover, when the number of pixel units S3 provided is only one, the increase in the circuit scale can be limited to a minimum. Meanwhile, when the pixel unit S3 is provided at the most upstream position of all the output lines, it is possible to detect a malfunction for all the output lines although the circuit scale is increased.

### (Fourth Embodiment)

In order to maximize the number of locations where malfunction detection is possible, a structure of a camera system according to the present embodiment includes a mechanical shutter (hereinafter referred to as a "mech. shutter") and is so configured that, while the incident light is shut out, the charges are injected from the reference signal generation units into the pixel units (all effective pixels including OB) which have been reset so that the reference signals will be outputted from the pixel units.

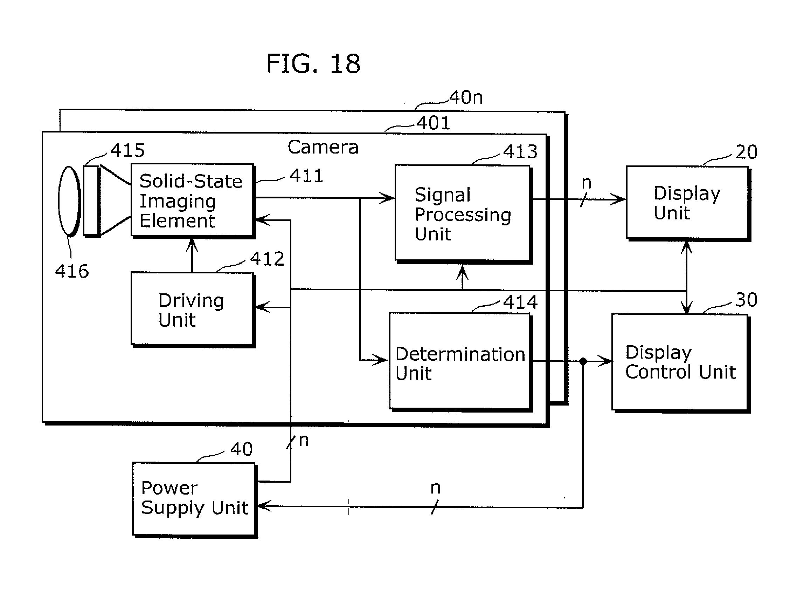

FIG. 18 is a block diagram illustrating the structure of the camera system according to a fourth embodiment. This figure differs from FIG. 1 in that cameras 401 to 40n displace the cameras 101 to 10n. The following description focuses on dissimilar points while omitting descriptions of identical points.

Each of the cameras 401 to 40n includes a solid-state imaging element 411, a driving unit 412, a signal processing unit 413, a determination unit 414, a mech. shutter 415, and an optical lens 416. The solid-state imaging element 411 includes the reference signal generation units that inject the charges into all pixels, instead of only some of the pixels, so as to generate the reference signals. The driving unit 412 drives a regular imaging operation and, in addition, exercises control of shutting the mech. shutter 415 in a malfunction detection mode to inject the reference signals into all the pixels. The signal processing unit 413 is identical to the signal processing unit 13. The determination unit 414 performs the same determination as the determination unit 14 illustrated in the first embodiment, with respect to all the pixels in the malfunction detection mode.

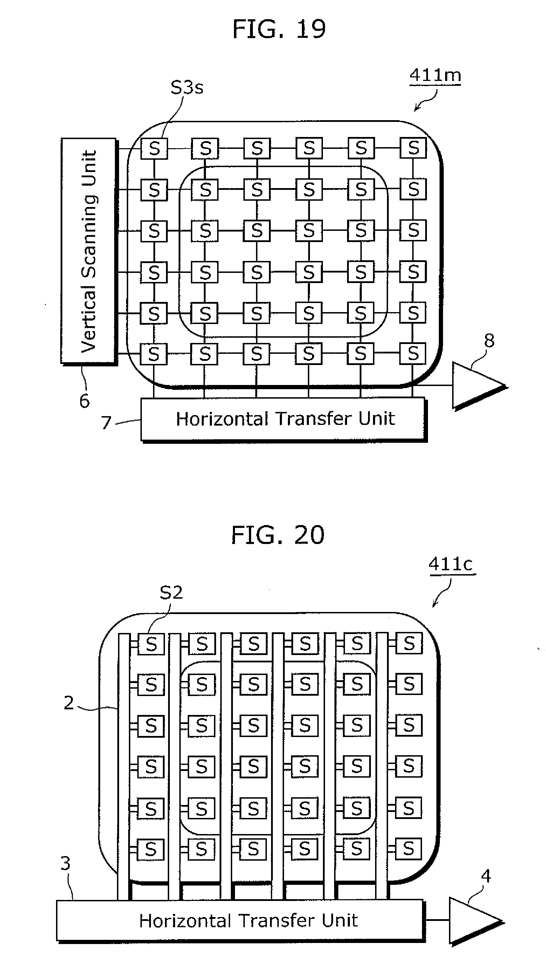

FIG. 19 is a block diagram illustrating a structure of the solid-state imaging element 411. This figure illustrates a structure of a solid-state imaging element 411m in the case where the solid-state imaging element 411 is of a MOS type. As shown in this figure, all pixels in the solid-state imaging element 411m are formed as pixel units S3s. In the present embodiment, the reference charge injection unit is added to all pixels, not only those in an area (an OB area) covered by a light-shielding film as optical black pixels but also those in an effective pixel area that is inside the OB area and not covered by the light-shielding film. A structure of each of the pixel units S3s is illustrated in FIG. 15B. FIG. 15B is different from FIG. 15A in that a switch SW1 is added. Since the structures thereof are the same in the other respects, description thereof is omitted, and the following description focuses on the dissimilarity. The switch SW1 is a switching transistor for turning on and off the operation of injecting the reference signal generated by the reference signal generation unit (i.e., the resistor R1 and the injection transistor Tr5) into the photodiode PD. The switch SW1 is turned on when performing the malfunction detection. While the switch SW1 is on, the mech. shutter 415 must be closed.

It is desirable that a time for which the reference signal is injected into the photodiode PD in the pixel unit S3s be the same in all the pixel units S3s. For example, after the signal charge stored in each photodiode PD is reset, the switch SW1 is maintained in an On state for a certain period of time. Alternatively, it may be so arranged that, after the signal charge stored in each photodiode PD is reset, the reference signal is read out by the output transistor Tr3 when a certain period of time has elapsed while the switch SW1 is maintained in the On state for a certain period of time.

FIG. 20 is a block diagram illustrating another exemplary structure of the solid-state imaging element. This figure illustrates a structure of a solid-state imaging element 411c in the case where the solid-state imaging element 411 is of a CCD type. As shown in this figure, all pixels in the solid-state imaging element 411c are formed as pixel units S2. As is the case with FIG. 19, the reference charge injection unit is added to all the pixels, not only those in an area (an OB area) covered by a light-shielding film as optical black pixels but also those in an effective pixel area that is inside the OB area and not covered by the light-shielding film. A structure of each of the pixel units S2 is the same as the structure illustrated in FIG. 8. It is desirable that a time for which the reference signal is injected into the photodiode PD in the pixel unit S3 be the same in all the pixel units S3. For example, it may be so arranged that, after the signal charge stored in each photodiode PD is reset, the reference signal is read out by the output transistor Tr3 when a certain period of time has elapsed. The same applies to the injection of the reference signal into the photodiode PD in the pixel units S2.

Next, operation timing of the malfunction detection mode by the driving unit 412 will now be described below.

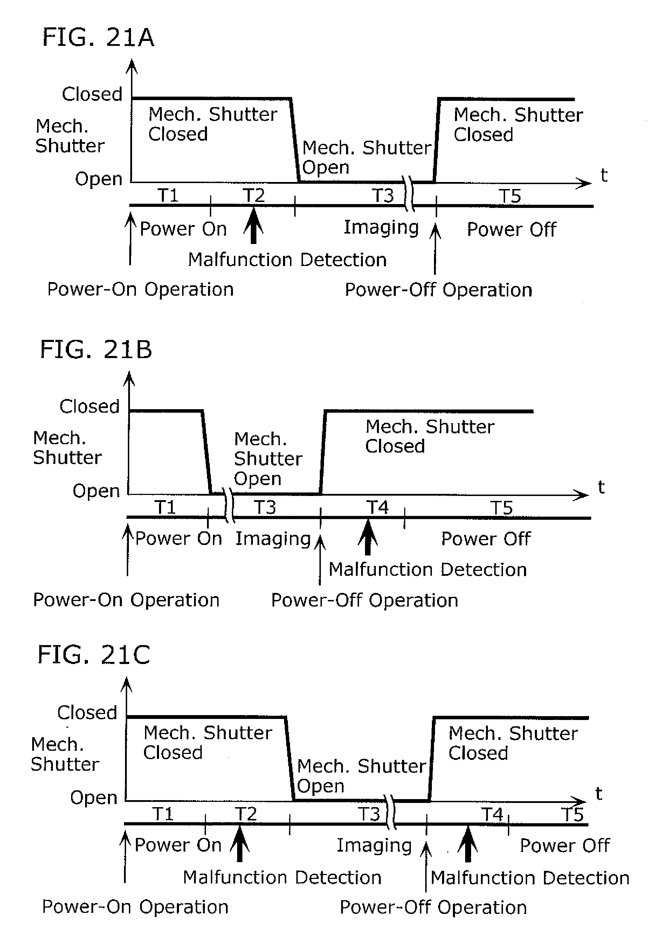

FIG. 21A is a diagram illustrating a first timing example in which the malfunction detection is performed immediately after power of the camera is turned on. A vertical axis in this figure represents an open/closed state (the upper side corresponds to a closed state, and the lower side an open state) of the mech. shutter 415. A horizontal axis represents time. A period T1 is a period from power-on operation to the time when stability is achieved, and the mech. shutter 415 is closed in this period. A period T2 is a period provided for performing the malfunction detection immediately after the period T1, and if the mech. shutter 415 is open in this period, the driving unit 412 controls it to be closed, and then controls the mech. shutter 415 to be open after the time T2 has elapsed. During this period T2, the driving unit 412 controls the reference charge injection units to, at least once, perform a malfunction detection operation, i.e., inject the reference charges into all the pixel units, and drives so that the reference signal will be outputted from each pixel to the determination unit 414. A period T3 is an imaging period, in which the driving unit 412 drives so that the regular imaging operation will be performed. Then, when a power-off operation is performed, the driving unit 412 closes the mech. shutter 415, and performs a termination process.

According to the above-described first timing example, it is possible to detect a malfunction that has occurred until immediately before the power of the camera is turned on, but a slight time delay, since the power of the camera is turned on until start of imaging, arises.

FIG. 21B is a diagram illustrating a second timing example in which the malfunction detection is performed immediately before the power of the camera is turned off. The difference from FIG. 21A is that a period T4 exists in place of the period T2. When the power-off operation is performed, the driving unit 412 closes the mech. shutter 415, drives the malfunction detection operation at least once, and, after the time T4 has elapsed, performs the termination process.

According to the above-described second timing example, the time delay, since the power of the camera is turned on until the start of imaging, does not arise. Moreover, a time delay that arises immediately before the power-off does not matter to a user. However, it is impossible to detect a malfunction that has occurred after the previous power-off and immediately before power-on, which may result in imaging being carried out in a malfunction-occurring condition.

FIG. 21C is a diagram illustrating a third timing example in which the malfunction detection is performed immediately after the power of the camera is turned on and immediately before the power is turned off. This figure is a combination of the first half of FIG. 21A and the second half of FIG. 21B.

According to the third timing example, the time delay, since the power is turned on until the start of imaging, arises, but it is possible to detect a malfunction that has occurred immediately before activation and a malfunction that has occurred during imaging, which is efficient for the user.

Further, an operation timing of the malfunction detection mode by the driving unit 412, the operation timing being compatible with any of FIG. 21A, FIG. 21B, and FIG. 21C, will now be described below.

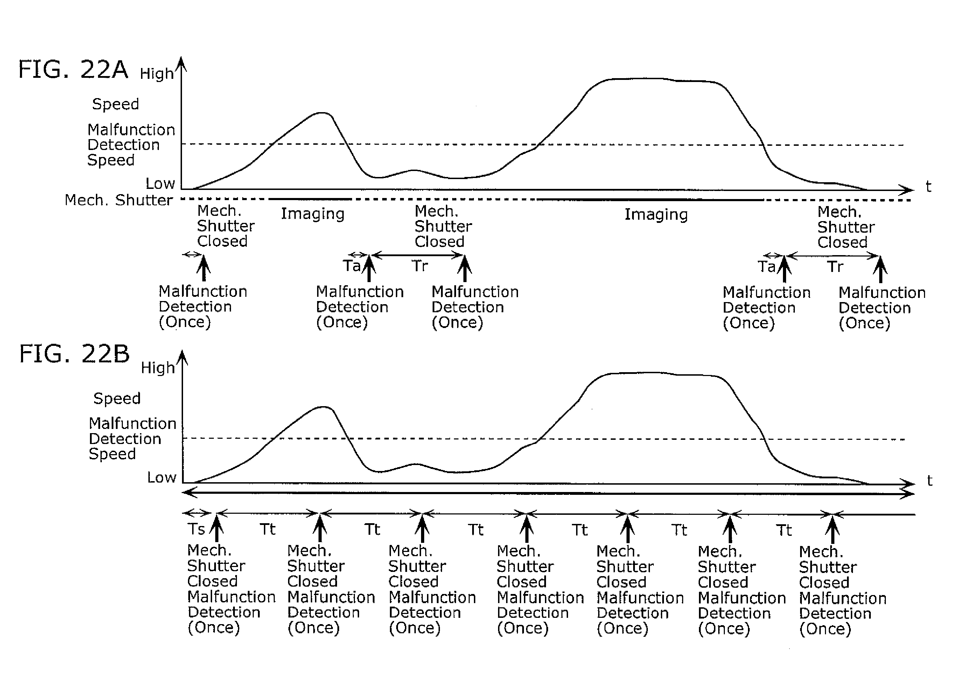

FIG. 22A is a diagram illustrating a fourth timing example of the malfunction detection. A vertical axis in this figure represents a speed of a vehicle on which the camera is mounted. A horizontal axis represents time and the open/closed state (a solid line corresponds to the open state, and a dashed line the closed state) of the mech. shutter 415. A malfunction detection speed in the figure indicates a speed that permits interruption of imaging without menacing safety, although it varies depending on the application of the camera. For example, it is several km/h to 30 km/h for a camera that monitors ahead; several km/h for a camera that monitors backward; and 0 km/h or a speed close to 0 km/h for a camera that monitors presence of a person. As shown in this figure, the driving unit 412 closes the mech. shutter 415 when the vehicle speed has become below the malfunction detection speed, and opens the mech. shutter 415 when the vehicle speed has exceeded the malfunction detection speed. Further, the driving unit 412 drives the malfunction detection operation immediately after the mech. shutter 415 is closed (Ts seconds after the closing), and drives the malfunction detection operation when a certain period of time, Tr, has elapsed, with the mech. shutter 415 being closed, after the previous malfunction detection.

According to the fourth timing example, imaging is interrupted for an instant when the vehicle speed is below the malfunction detection speed, but it is possible to detect early a malfunction that has occurred while the vehicle is traveling or unmoving.

FIG. 22B is a diagram illustrating a fifth timing example of the malfunction detection. In this figure, the driving unit 412 closes the mech. shutter 415 at regular intervals (of a time Tt) regardless of the vehicle speed to drive the malfunction detection operation. Since the malfunction detection is forcibly performed periodically in regular imaging, it is desirable that a time for which the mech. shutter 415 is closed be as short as possible.

According to the fifth timing example, imaging is interrupted for an instant periodically, but it is possible to detect, without fail, a malfunction that has occurred while the vehicle is traveling or unmoving within a certain period of time after the occurrence of the malfunction.

### (Fifth Embodiment)

In the present embodiment, a camera system will be described that is capable of checking all pixels for malfunction while in operation, without using the mech. shutter.

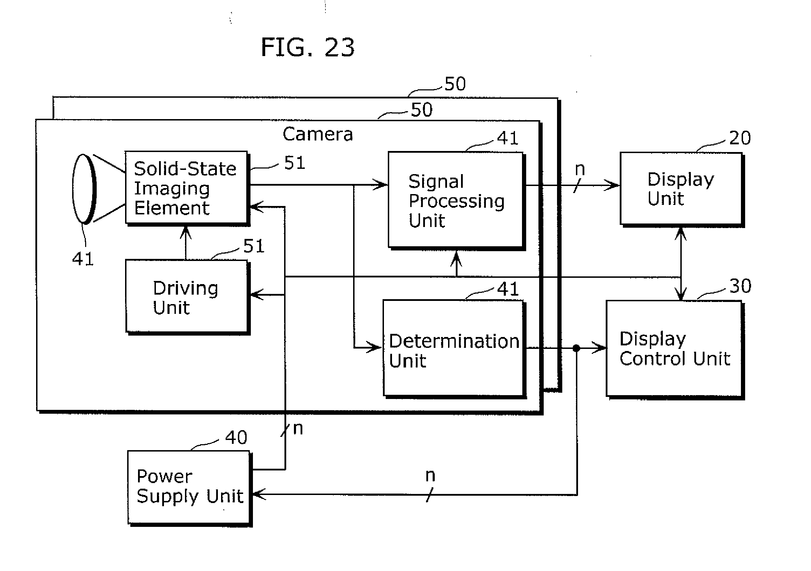

FIG. 23 is a block diagram illustrating a structure of a camera system according to a fifth embodiment. This figure is different from FIG. 18 in that cameras 501 to 50n displace the cameras 401 to 40n. The following description focuses on dissimilar points while omitting descriptions of identical points.

Compared to the camera 401 in FIG. 18, the camera 501 includes a solid-state imaging element 511 and a driving unit 512 in place of the solid-state imaging element 411 and the driving unit 412. In the solid-state imaging element 411, the reference charge generation unit injects the reference signal charge into the pixel, whereas, in the solid-state imaging element 511, the reference charge generation unit does not inject the reference signal charge into the pixel, but outputs the reference signal in place of the pixel. This makes it possible to output the reference signal without the need for the mech. shutter.

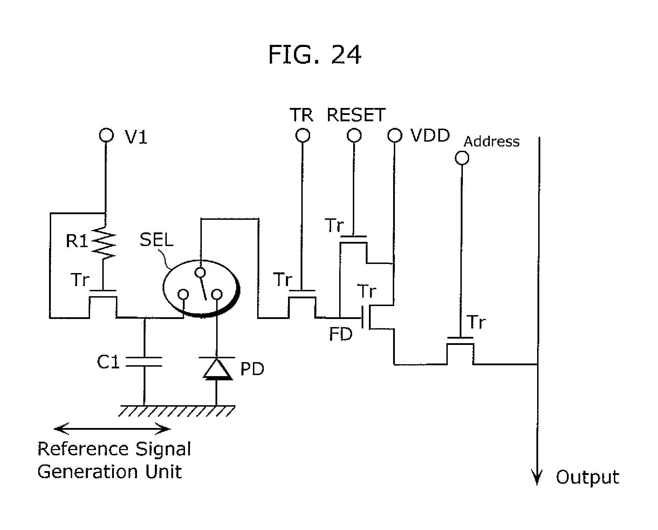

FIG. 24 is a block diagram illustrating a detailed structure of a pixel unit within the solid-state imaging element 511. This figure is different from FIG. 15A in that a capacitor C1 and a selection unit SEL1 are added.

The capacitor C1 combines with the resistor R5 and the transistor Tr5 to form the reference signal generation unit, and stores the reference charge. The selection unit SEL1 selects one of the photodiode PD and the capacitor C1. The signal charge or reference charge selected is read out to the floating diffusion layer FD via the transfer transistor Tr1. The driving unit 512 controls the selection unit SEL1 to select the photodiode PD during regular imaging, and the capacitor C1 during the malfunction detection operation.

Since the photodiodes PD are isolated during the malfunction detection operation, it is possible to detect an abnormality in any of the paths from the reference signal generation units to an output terminal of the solid-state imaging element 511 even when the shutter is in the open state.

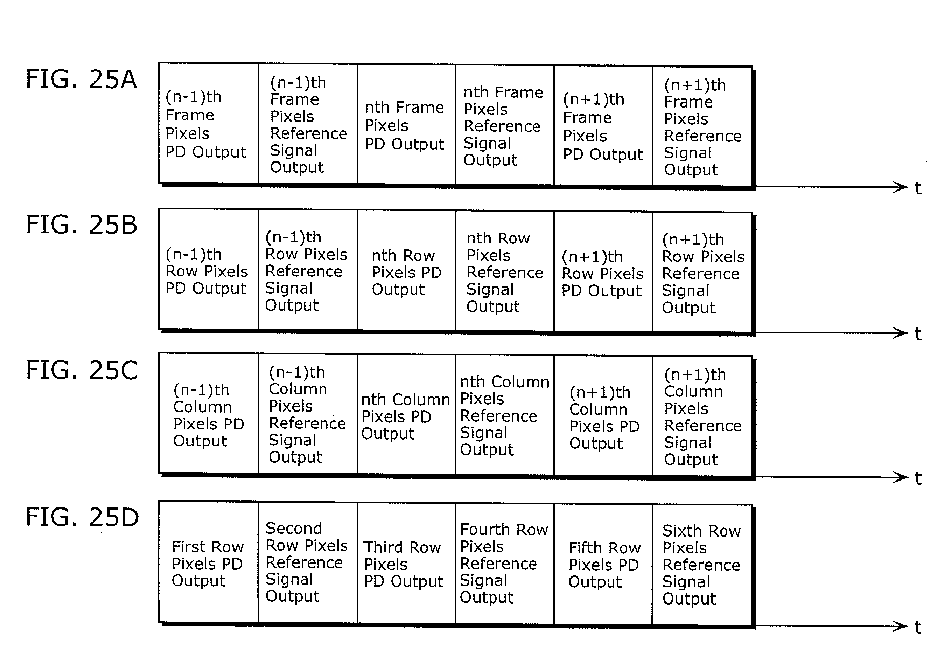

FIG. 25A is a diagram illustrating a first driving example by the driving unit 512. In this figure, a horizontal axis represents time. The driving unit 512 controls the selection unit SEL1 to switch, on a frame-by-frame basis, between the signal outputted from the photodiode PD and the reference signal outputted from the reference signal generation unit. That is, the driving unit 512 drives in such a manner that output of the signal from the photodiode PD in each of the pixels that constitute an (n-1)th frame, output of the reference signal from the reference signal generation unit in each of the pixels that constitute the (n-1)th frame, output of the signal from the photodiode PD in each of the pixels that constitute an nth frame, output of the reference signal from the reference signal generation unit in each of the pixels that constitute the nth frame, output of the signal from the photodiode PD in each of the pixels that constitute an (n+1)th frame, output of the reference signal from the reference signal generation unit in each of the pixels that constitute the (n+1)th frame, and so on, are performed.

FIG. 25B is a diagram illustrating a second driving example by the driving unit 512. In this figure, the driving unit 512 controls the selection unit SELL to switch, on a row-by-row basis, between the signal outputted from the photodiode PD and the reference signal outputted from the reference signal generation unit. That is, the driving unit 512 drives in such a manner that output of the signal from the photodiode PD in each of the pixels that constitute an (n-1)th row, output of the reference signal from the reference signal generation unit in each of the pixels that constitute the (n-1)th row, output of the signal from the photodiode PD in each of the pixels that constitute an nth row, output of the reference signal from the reference signal generation unit in each of the pixels that constitute the nth row, output of the signal from the photodiode PD in each of the pixels that constitute an (n+1)th row, output of the reference signal from the reference signal generation unit in each of the pixels that constitute the (n+1)th row, and so on, are performed.

FIG. 25C is a diagram illustrating a third driving example by the driving unit 512. In this figure, the driving unit 512 controls the selection unit SEL1 to switch, on a column-by-column basis, between the signal outputted from the photodiode PD and the reference signal outputted from the reference signal generation unit. That is, the driving unit 512 drives in such a manner that output of the signal from the photodiode PD in each of the pixels that constitute an (n-1)th column, output of the reference signal from the reference signal generation unit in each of the pixels that constitute the (n-1)th column, output of the signal from the photodiode PD in each of the pixels that constitute an nth column, output of the reference signal from the reference signal generation unit in each of the pixels that constitute the nth column, output of the signal from the photodiode PD in each of the pixels that constitute an (n+1)th column, output of the reference signal from the reference signal generation unit in each of the pixels that constitute the (n+1)th column, and so on, are performed.

Each of the driving examples of FIG. 25A, FIG. 25B, and FIG. 25C may be either performed constantly as the regular imaging operation, or performed in a imaging and malfunction detection mode that is distinguished from the regular imaging operation or the malfunction detection operation.

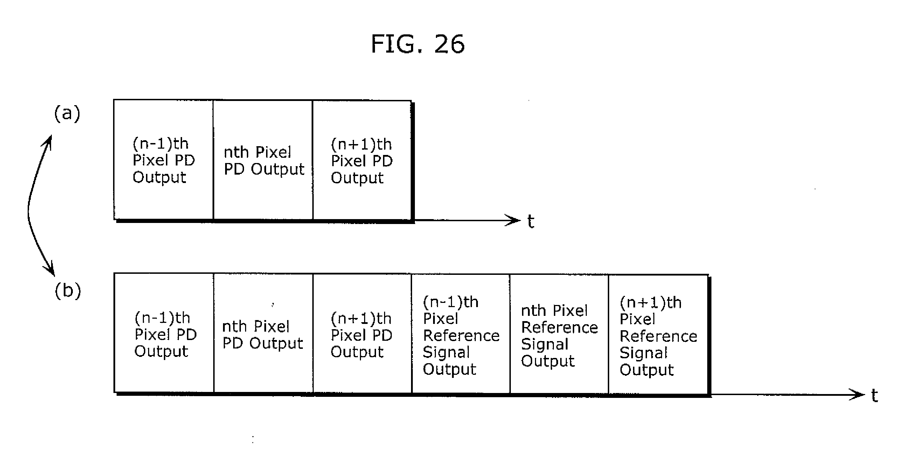

FIG. 26 is a diagram illustrating a fourth driving example by the driving unit 512. In this figure, the driving unit 512 drives in such a manner that the regular imaging mode (a) and the imaging and malfunction detection mode (b) are switched therebetween. In the imaging and malfunction detection mode (b), the driving unit 512 controls the selection unit SEL1 to switch, on the basis of N (in this figure, N=3) pixels, between the signal outputted from the photodiode PD and the reference signal outputted from the reference signal generation unit.

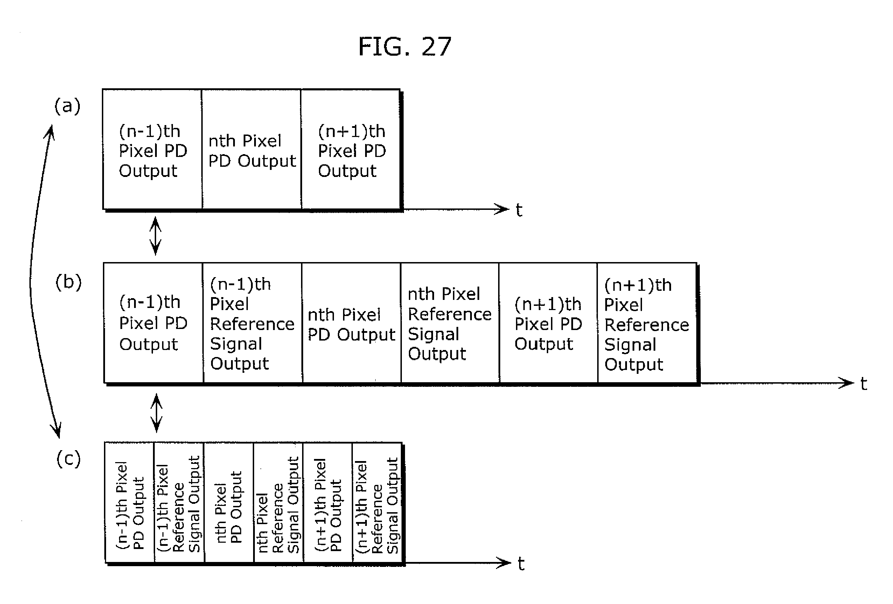

FIG. 27 is a fifth driving example by the driving unit 512. The driving unit 512 drives in such a manner that the regular imaging mode (a), the imaging and malfunction detection mode (b), and a double-speed mode (c) are switched therebetween. In the imaging and malfunction detection mode (b), the driving unit 512 controls the selection unit SEL1 to switch, on the basis of N (in this figure, N=1) pixels, between the signal outputted from the photodiode PD and the reference signal outputted from the reference signal generation unit. The double-speed mode (c) is identical to the imaging and malfunction detection mode (b) in the manner of driving, but different therefrom in that an operation clock is twice as fast. In the double-speed mode (c), imaging can be performed with the same frame rate as in the regular imaging mode (a).

Note that, in the present embodiment, video signal processing and malfunction detection may be performed in a single imaging operation on a desired area within the effective pixel area and the remaining area, respectively. Supposing, for example, that the desired area is composed of the odd-numbered rows, the remaining area is composed of the even-numbered rows. In this case, half an image can be obtained while performing the malfunction detection on the half of the area. A driving example by the driving unit 512 in this case is illustrated in FIG. 25D. Further, supposing that a desired area in the next imaging operation is composed of the even-numbered rows, the remaining area is composed of the odd-numbered rows. Thus, the malfunction detection can be performed on all the pixels with the two imaging operations. Note that the desired area can be set arbitrarily, such as the upper, lower, left, or right half, or a central part of the effective pixel area. Thus, the malfunction detection and image acquisition can be achieved at the same time in a single imaging operation. Further, the malfunction detection can be performed on all the pixels by changing the desired area. Still further, flexibility in system design with respect to the desired area can be improved.

### (Sixth Embodiment)

The pixel units and the reference signal generation units are provided in a one-to-one ratio in the fourth embodiment, whereas, in the present embodiment, a case where the pixel units and the reference signal generation units are provided in a multiple-to-one ratio will be described.

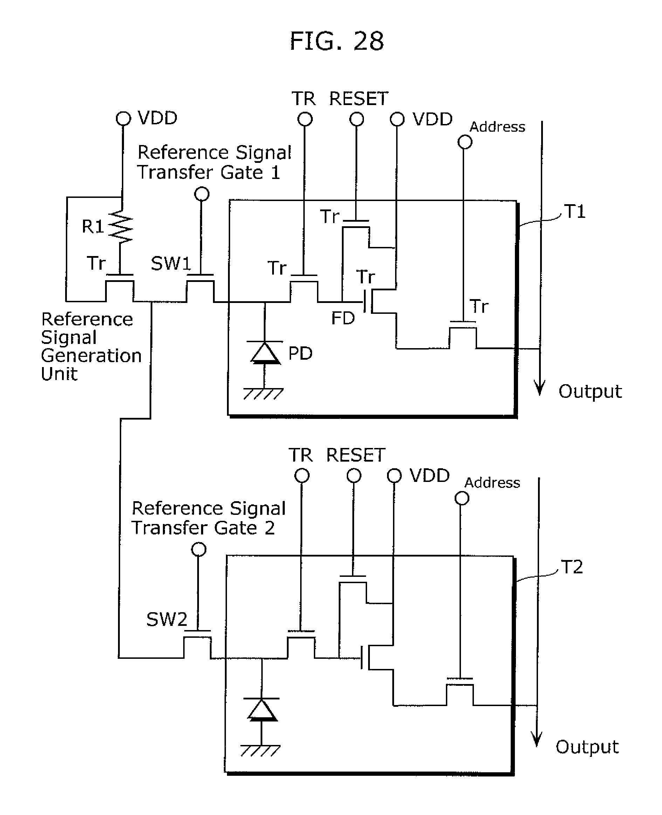

FIG. 28 is a circuit diagram illustrating a configuration of two pixel units according to a sixth embodiment. In this figure, a single reference signal generation unit (i.e., the resistor R1 and the transistor Tr5) is connected to two pixel units T1 and T2. A switch SW1 is a switch for injecting the reference charge into the pixel unit T1. A switch SW2 is a switch for injecting the reference charge into the pixel unit T2. Provision of such switches allows the single reference signal generation unit to be shared by the plurality of pixel units, resulting in reduction in the circuit scale.

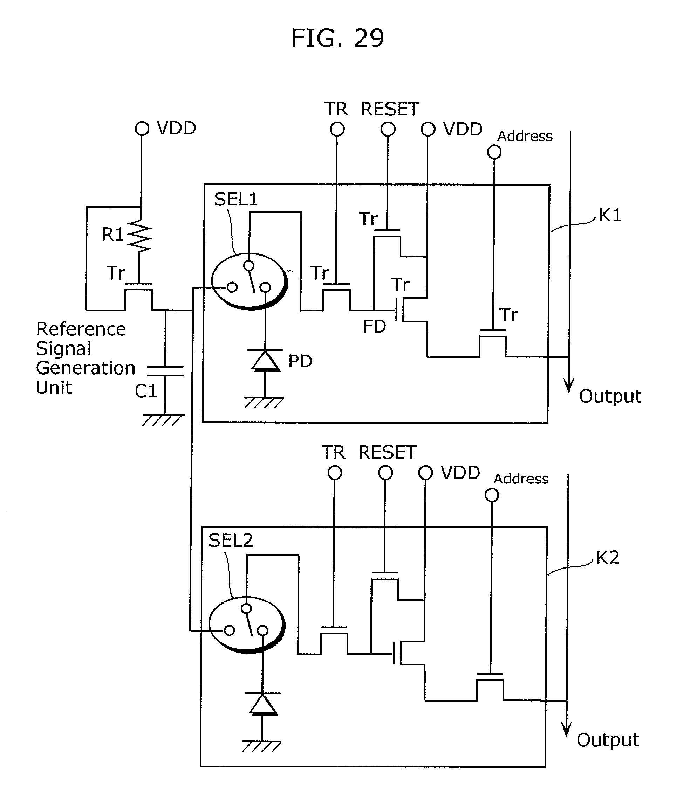

Note that while the pixel units and the reference signal generation units are provided in a one-to-one ratio also in the fifth embodiment, the pixel units and the reference signal generation units may be provided in a multiple-to-one ratio therein as in FIG. 28. An exemplary configuration in this case is illustrated in FIG. 29. In this figure, a single reference signal generation unit (i.e., the resistor R1, the transistor Tr5, and the capacitor C1) is connected to two pixel units K1 and K2. A selection unit SEL11 selects either the photodiode PD or the reference signal generation unit as a source of transfer to the floating diffusion layer FD. This is also true with a selection unit SEL2SW2. Provision of such selection units allows the single reference signal generation unit to be shared by the plurality of pixel units, resulting in reduction in the circuit scale.

Note that, in FIGS. 28 and 29, the number of pixel units that share the single reference charge generation unit is not limited to two, but it may be any number as long as the reference charge generation unit is able to supply the charge thereto. Also note that it is desirable that the sharing pixel units be not subjected to readout at the same time in view of the capability of the reference signal generation unit to supply the charge. For example, it is desirable that they belong to different rows or columns.

### (Seventh Embodiment)

Only one type of reference signal is used in the above-described embodiments, whereas in the present embodiment, an arrangement in which a plurality of types of reference signals are used will be described. This makes it possible to detect a malfunction of the output signal being fixed by chance at the same level as that of the reference signal.

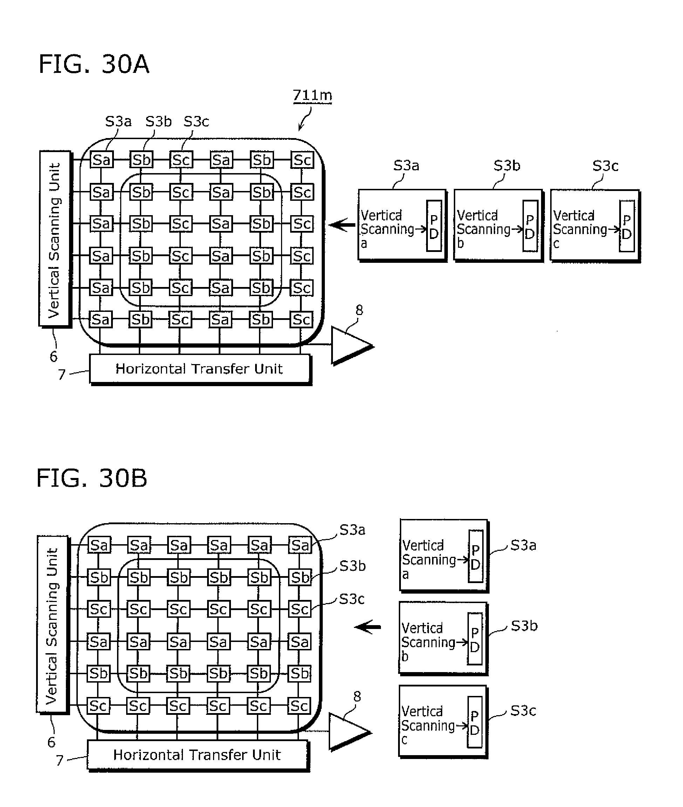

FIG. 30A is a block diagram illustrating a structure of a MOS solid-state imaging element according to a seventh embodiment. This figure is identical to FIG. 19 in structure, but different in that three types of reference signal generation units exist. The following description focuses on dissimilar points while omitting descriptions of identical points. In FIG. 30A, a first reference signal generation unit that generates a first fixed level (referred to as a "reference signal a") as the reference signal is added to a pixel unit S3a. A second signal generation unit that generates a second fixed level b (referred to as a "reference signal b") as the reference signal is added to a pixel unit S3b. A third signal generation unit that generates a third fixed level c (referred to as a "reference signal c") as the reference signal is added to a pixel unit S3c. The first fixed level a, the second fixed level b, and the third fixed level c are levels different from one another. The first, second, and third reference signal generation units may have the same structure as illustrated in FIG. 24, FIG. 28, or FIG. 29, and adjustment of the resistance of the resistor R1 achieves generation of the reference signals a, b, and c. Note that pixel units labeled Sa, Sb, and Sc in FIG. 30A have the same structures as those of the pixel units S3a, S3b, and S3c, respectively.

The pixel units Sa, Sb, and Sc are aligned systematically. In FIG. 30A, the pixel units Sa, Sb, and Sc are aligned repeatedly in this order in a row direction. This type of systematic alignment is desirable in the case where an order in which the pixel units are read out is a row-direction order.

FIG. 30B is a block diagram illustrating another structure of the MOS solid-state imaging element. In this figure, in contrast to FIG. 30A, the pixel units Sa, Sb, and Sc are aligned repeatedly in this order in a column direction. This type of alignment is desirable in the case where the order in which the pixel units are read out is a column-direction order.

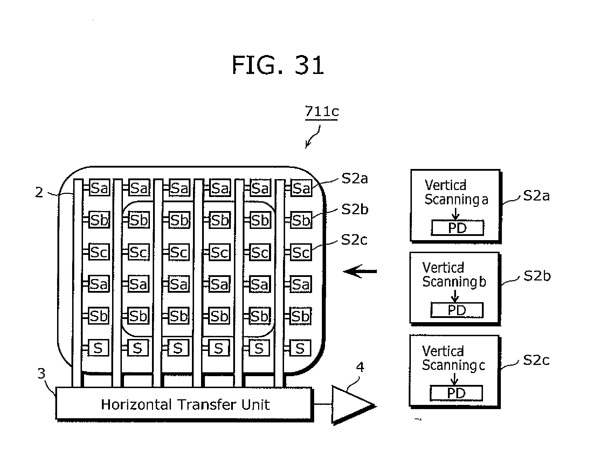

FIG. 31 is a block diagram illustrating a structure of a CCD solid-state imaging element. In FIG. 31, the first reference signal generation unit that generates the first fixed level (referred to as the "reference signal a") as the reference signal is added to a pixel unit S2a. Similarly, the second reference signal generation unit and the third reference signal generation unit that generate the reference signal b and the reference signal c are added to a pixel unit S2b and a pixel unit S2c. In this figure, as in FIG. 30B, the pixel units Sa, Sb, and Sc are aligned repeatedly and systematically in this order in the column direction.

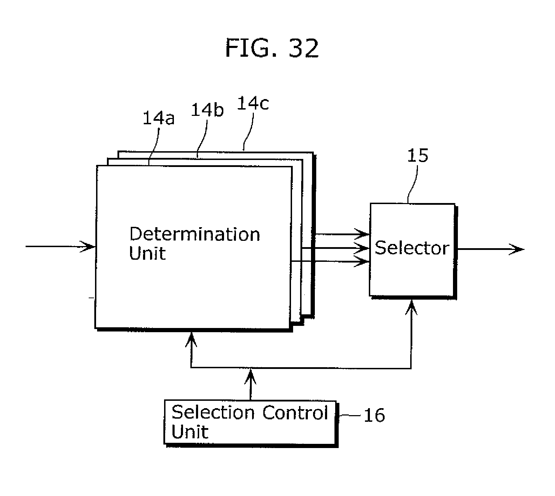

FIG. 32 is a block diagram illustrating a structure of a determination unit (hereinafter referred to as an "expanded determination unit") corresponding to the three types of reference signals. The expanded determination unit in this figure includes determination units 14a, 14b, and 14c, a selector 15, and a selection control unit 16. The determination unit 14a has the same structure as that of the determination unit 14 as illustrated in FIG. 7, and the upper-limit value ThH and the lower-limit value ThL are set for the reference signal a. This is also true with the determination units 14b and 14c except that the upper-limit value ThH and the lower-limit value ThL are set for the reference signals b and c. The selector 15 selects one of determination results obtained by the determination units 14a, 14b, and 14c. The selection control unit 16 controls the selector 15 to select the determination units 14a, 14b, and 14c corresponding to the reference signals a, b, and c in accordance with an alignment rule for the pixel units Sa, Sb, and Sc in the solid-state imaging element. At this time, the selection control unit 16 enables the determination unit corresponding to a current reference signal, out of the determination units 14a, 14b, and 14c, and disables the other determination units.

Note that the number of types of reference signals is not limited to three. Also note that although the pixel units Sa, Sb, and Sc are aligned systematically, they may be aligned at random. In this case, the selection control unit 16 may be configured to select the determination units 14a, 14b, and 14c in accordance with a result of the random alignment.

### (Eighth Embodiment)

In the present embodiment, a camera system that allows prompt recovery when a malfunction has been detected will be described.

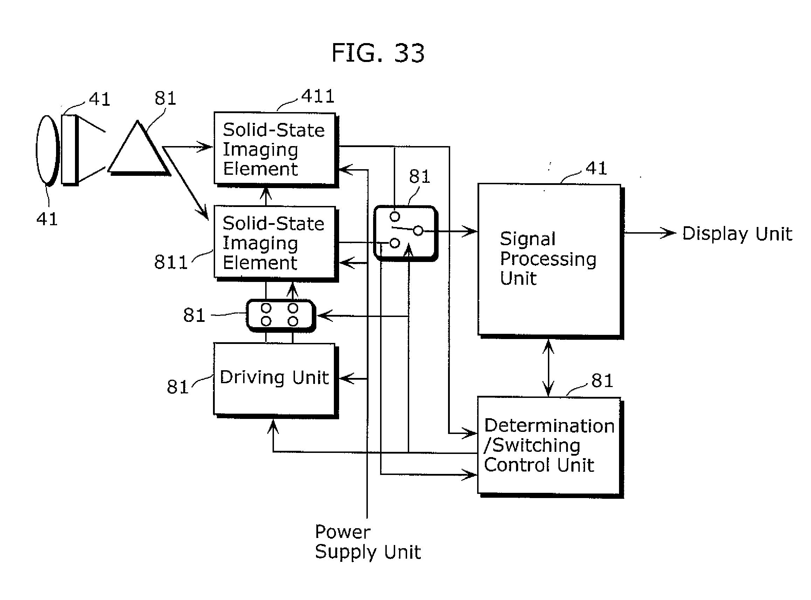

FIG. 33 is a block diagram illustrating a structure of a camera according to an eighth embodiment. This figure is provided in place of at least one of the cameras 101 to 10n as illustrated in FIG. 1 or at least one of the cameras 401 to 40n as illustrated in FIG. 18. FIG. 33 is different from the camera 401 in FIG. 18 in that a solid-state imaging element 811, a prism 817, and switch units 818 and 819 are added, that a determination/switching control unit 814 is added in place of the determination unit 414, and that a driving unit 812 is added in place of the driving unit 412. The following description focuses on dissimilar points while omitting descriptions of identical points.

The solid-state imaging element 811 may be the same solid-state imaging element as the solid-state imaging element 411.
In the present embodiment, the solid-state imaging element 811 is described as a backup to be used when the solid-state imaging element 411 is suffering a malfunction.

The prism 817 is an optical system for dispersing the incident light to the solid-state imaging element 411 and the solid-state imaging element 811.

The switch 818 is a switching switch for outputting the driving signal obtained from the driving unit 812 to one of the solid-state imaging element 411 and the solid-state imaging element 811.

The switch 819 is a selection switch for selecting one of a signal outputted from the solid-state imaging element 411 and a signal outputted from the solid-state imaging element 811. The output signal selected is inputted to the signal processing unit 413.

In addition to having the capability of the determination unit as illustrated in FIG. 32, the determination/switching control unit 814 is configured to shift the solid-state imaging element 411 to an inactive state and shift the solid-state imaging element 811 to an active state when occurrence of a malfunction in the solid-state imaging element 411 has been determined. The shifting from the active state to the inactive state is achieved by making the level of the driving signal sent to the solid-state imaging device 411 fixed. For example, an I/O may be set at a low level, GND, a high level, VDD, or a high impedance state. Note that power supply is interrupted by the power supply unit 40.

The driving unit 812 is similar in capability to the driving unit 412, but drives the selected one of the solid-state imaging element 411 and the solid-state imaging element 811. In the case where the solid-state imaging element 411 and the solid-state imaging element 811 differ in type, the driving unit 812 drives them each in a manner appropriate for their type.

Note that although, in FIG. 33, the optical system including the prism is used for dispersing the incident light to each of the solid-state imaging elements, another type of optical system that does not include a prism may be used alternatively as long as the incident light can be dispersed to each of the solid-state imaging elements. Alternatively, instead of dispersing the incident light, a lens may be provided for each of the solid-state imaging elements.

Also note that although, in FIG. 33, the case where the number of solid-state imaging elements is two has been described, the number thereof is not limited to two. For example, it may be so arranged that M (M is two or more) solid-state imaging elements are provided, the switch 819 selects m (m is one or more) signal(s) from among signals outputted from the M solid-state imaging elements, and the signal processing unit 413 processes the m output signal(s). Further, when occurrence of a malfunction in any of the m solid-state imaging elements has been determined, the determination/switching control unit 814 may switch the source of output to the signal processing unit 413 from the solid-state imaging device that has been determined to be suffering the malfunction to a solid-state imaging device that has not been determined to be suffering malfunction.

The determination/switching control unit 814 may switch between the active state and the inactive state by controlling the supply of power to the solid-state imaging element, or may switch between the active state and the inactive state by controlling the driving signal sent to the solid-state imaging element. Further, it may switch between the active state and the inactive state by, while supplying power to the M solid-state imaging elements at all times, starting or stopping the driving signal sent to the solid-state imaging element.

Note that although, in each of the above-described embodiments, the automobile has been indicated as an exemplary vehicle on which the camera system is installed, the automobile is not limited to a passenger car, but may be an automobile such as a bus, a truck, or the like, a two-wheeled vehicle, an aircraft, or a movable unit such as a transfer robot or the like.

Note that, in each of the above-described embodiments, the signal processing unit 13 and the determination unit 14, for example, may be formed as a single unit like the display unit 20, and the solid-state imaging element 11 and the determination unit 14, the driving unit 12, the signal processing unit 13, or the like may be arranged on a single chip. Such single-chip arrangement achieves, for example, an effect of increase in processing speed due to reduction in the number of parts or a reduced distance between wires.

Also note that, needless to say, any combination of compatible embodiments among the above-described embodiments is permitted.

Note that in the fourth to eighth embodiments, the malfunction detection is possible with respect to all pixels, and therefore, it is easy to discover a defect on a pixel-by-pixel basis. This enables various types of signal processing that exclude influence of a defective pixel on a video signal.

### Industrial Applicability

The present invention is suitable for a solid-state imaging device for taking an image, a camera, an automobile, and a monitoring device.

## Claims

1. A solid-state imaging device comprising:
a plurality of photoelectric conversion units each operable to generate a signal corresponding to a quantity of incident light;
a plurality of readout units operable to read out the signals generated by said photoelectric conversion units;
transfer paths for transferring the signals read out by each of said readout units;
an output unit operable to output each of the signals transferred from said readout units via said transfer path; and
a generation unit operable to generate a constant reference signal,
wherein the reference signal is outputted from said output unit via at least a part of said transfer path.

2. The solid-state imaging device according to Claim 1,
wherein the constant reference signal is at a fixed level between a first level and a second level,
the first level is a level of a signal that is generated by one of said photoelectric conversion units when the quantity of the incident light is zero, and
the second level is a level of a signal that is generated by one of said photoelectric conversion units and which has a level higher than the first level.

3. The solid-state imaging device according to Claim 1 or 2, further comprising
a determination unit operable to determine whether the reference signal outputted from said output unit falls within a normal range which is between an upper-limit value and a lower-limit value, and output a detection signal when the reference signal is out of the range.

4. The solid-state imaging device according to one of Claims 1 to 3,
wherein said plurality of photoelectric conversion units are arranged in a matrix,
said transfer path includes:
a plurality of vertical transfer units provided so as to correspond to columns of said photoelectric conversion units, and each operable to transfer signal charges read out from said photoelectric conversion units in a corresponding one of the columns; and
a horizontal transfer unit operable to transfer the signal charges transferred from said plurality of vertical transfer units, and
the reference signal is outputted from said output unit via at least one of said vertical transfer units and said horizontal transfer unit.

5. The solid-state imaging device according to Claim 4,
wherein said generation unit is operable to inject a reference charge corresponding to the reference signal into any one of said photoelectric conversion units.

6. The solid-state imaging device according to Claim 4,
wherein said generation unit is operable to inject a reference charge corresponding to the reference signal into one of said photoelectric conversion units that is placed close to a most upstream position of one of said vertical transfer units that is connected to a position close to a most upstream position of said horizontal transfer unit.

7. The solid-state imaging device according to Claim 4,
wherein said generation unit is operable to inject a reference charge corresponding to the reference signal into one of said photoelectric conversion units that is placed close to a most upstream position of each of said vertical transfer units.

8. The solid-state imaging device according to Claim 4,
wherein said generation unit is operable to inject a reference charge corresponding to the reference signal into at least one of said plurality of vertical transfer units at a position close to a most upstream position thereof.

9. The solid-state imaging device according to Claim 4,
wherein said generation unit is operable to inject a reference charge corresponding to the reference signal into one of said vertical transfer units that is connected to a position close to a most upstream position of said horizontal transfer unit at a position close to a most upstream position thereof.

10. The solid-state imaging device according to Claim 4,
wherein said generation unit is operable to inject a reference charge corresponding to the reference signal into each of said vertical transfer units at a position close to a most upstream position thereof.

11. The solid-state imaging device according to Claim 4,
wherein said generation unit is operable to inject a reference charge corresponding to the reference signal into one of said photoelectric conversion units that is placed close to a most upstream position of at least one of said plurality of vertical transfer units.

12. The solid-state imaging device according to one of Claims 1 to 3,
wherein said plurality of photoelectric conversion units are arranged in a matrix,
said transfer path includes:
a row selection unit operable to select one row of said photoelectric conversion units;
a column selection unit operable to select one column of said photoelectric conversion units; and
an output line provided for each column and operable to transfer the signal read out from one of said photoelectric conversion units that is in the selected row and in the selected column, and
the reference signal is outputted from said output unit via said output line.

13. The solid-state imaging device according to Claim 12,
wherein said generation unit is operable to inject a reference charge corresponding to the reference signal into any one of said photoelectric conversion units.

14. The solid-state imaging device according to Claim 12,
wherein said generation unit is operable to inject a reference charge corresponding to the reference signal into one of said photoelectric conversion units that is located in one of the rows that is selected last and in one of the columns that is selected last.

15. The solid-state imaging device according to Claim 12,
wherein said generation unit is operable to inject a reference charge corresponding to the reference signal into one of said photoelectric conversion units that is placed close to a most upstream position of each of at least one of said output lines.

16. The solid-state imaging device according to one of Claims 5 to 7 and 13 to 15,
wherein said photoelectric conversion unit or units to which the reference signal is supplied is shielded from the light.

17. The solid-state imaging device according to one of Claims 3 to 16, further comprising
a warning unit operable to issue a warning of malfunction to outside when the detection signal is outputted from said determination unit.

18. The solid-state imaging device according to one of Claims 3 to 16,
wherein, when said determination unit has outputted the detection signal, said determination unit is operable to instruct a power supply unit to stop supply of power to a part of said solid-state imaging device.

19. The solid-state imaging device according to Claim 1 or 2, further comprising:
a shutter unit operable to control the light incident on said plurality of photoelectric conversion units; and
a control unit operable to control said shutter unit to shut out the light, and control said generation unit to inject the reference signal into each of said plurality of photoelectric conversion units.

20. The solid-state imaging device according to Claim 19,
wherein said control unit is operable to control said shutter unit to shut out the light, and control said generation unit to inject the reference signal, immediately after power of said solid-state imaging device is turned on, or immediately before the power thereof is turned off, or on both occasions.

21. The solid-state imaging device according to Claim 19,
wherein said solid-state imaging device is mounted on a vehicle, and
said control unit is operable to control said shutter unit to shut out the light and control said generation unit to inject the reference signal at least once when a speed of the vehicle is less or equal to a threshold.

22. The solid-state imaging device according to Claim 19,
wherein said control unit is operable to control said shutter unit to shut out the light periodically, and control said generation unit to inject the reference signal.

23. The solid-state imaging device according to Claim 1 or 2,
wherein said generation unit includes:
a plurality of reference signal generation units corresponding to said plurality of photoelectric conversion units; and
a plurality of selection units corresponding to said plurality of photoelectric conversion units, and
said solid-state imaging device further comprises a selection control unit operable to control said selection units when imaging,
each of said reference signal generation units is operable to generate the reference signal, and
each of said selection units is provided between said photoelectric conversion unit and said readout unit, and is operable to select one of the signal generated by said photoelectric conversion unit and the reference signal generated by said reference signal generation unit.

24. The solid-state imaging device according to Claim 23,
wherein said selection control unit is operable to control said selection units to alternately select, by a predetermined number, the signals generated by said photoelectric conversion units and the reference signals generated by said reference signal generation units.

25. The solid-state imaging device according to Claim 24,
wherein the predetermined number is one of the number of photoelectric conversion units corresponding to one, one row, a multiple of the number of photoelectric conversion units corresponding to one row, the number of photoelectric conversion units corresponding to one column, a multiple of the number of photoelectric conversion units corresponding to one column, the number of said plurality of photoelectric conversion units, and a multiple of the number of said plurality of photoelectric conversion units.

26. The solid-state imaging device according to one of Claims 23, 24, and 25,
wherein the number of said plurality of reference signal generation units is equal to the number of said plurality of photoelectric conversion units, and
each of said reference signal generation units is connected to one of said selection units.

27. The solid-state imaging device according to one of Claims 23, 24, and 25,
wherein the number of said plurality of reference signal generation units is less than the number of said plurality of photoelectric conversion units, and
at least one of said reference signal generation units is connected to two or more of said selection units.

28. The solid-state imaging device according to Claim 27,
wherein each of said reference signal generation units is connected to N (N is two or more) selection units.

29. The solid-state imaging device according to one of Claims 23 to 28,
wherein said selection control unit is operable to selectively control a first operation in which said selection units are caused to select the signals generated by said photoelectric conversion units for imaging while not causing said selection units to select the reference signals, and a second operation in which said selection units are caused to alternately select, by a predetermined number, the reference signals and the signals generated by said photoelectric conversion units for imaging.

30. The solid-state imaging device according to Claim 29,
wherein said selection control unit uses operation clocks having the same speed in the first operation and the second operation.

31. The solid-state imaging device according to Claim 29,
wherein said selection control unit uses, in the second operation, an operation clock that is faster than an operation clock used in the first operation.

32. The solid-state imaging device according to Claim 29,
wherein said selection control unit is further operable to selectively control a third operation in which said selection units are caused to select the reference signals for imaging while said selection units are not allowed to select the signals generated by said photoelectric conversion units.

33. The solid-state imaging device according to Claim 23,
wherein said plurality of reference signal generation units include a first signal generation unit operable to generate a first fixed level as the reference signal, and a second signal generation unit operable to generate a second fixed level as the reference signal.

34. The solid-state imaging device according to Claim 33,
wherein said first signal generation units and said second signal generation units are aligned systematically with respect to a row direction of said photoelectric conversion units.

35. The solid-state imaging device according to Claim 33,
wherein said first signal generation units and said second signal generation units are aligned systematically with respect to a column direction of said photoelectric conversion units.

36. The solid-state imaging device according to one of Claims 33, 34, and 35, further comprising:
a first determination unit operable to determine whether the reference signal outputted from said output unit falls within a normal range of the first fixed level, which is between an upper-limit value and a lower-limit value;
a second determination unit operable to determine whether the reference signal outputted from said output unit falls within a normal range of the second fixed level, which is between an upper-limit value and a lower-limit value; and
an abnormality determination unit operable to output a detection signal when abnormality is detected based on alignment of said first signal generation units and said second signal generation units, and determination results obtained by said first and second determination units.

37. The solid-state imaging device according to one of Claims 19 to 32, further comprising:
a determination unit operable to determine whether the reference signal outputted from said output unit falls within a normal range which is between an upper-limit value and a lower-limit value, and output a detection signal when the reference signal does not fall within the range; and
a warning unit operable to issue a warning of malfunction to outside when the detection signal is outputted from said determination unit.

38. The solid-state imaging device according to Claim 37,
wherein, when said determination unit has outputted the detection signal, said determination unit is operable to instruct a power supply unit to stop supply of power to a part of said solid-state imaging device.

39. A camera comprising:
M (M is two or more) solid-state imaging devices according to one of Claims 1, 2, and 19 to 35;
a determination unit operable to determine malfunction based on reference signals outputted from said M solid-state imaging devices;
a signal processing unit operable to process an output signal of m (m is one or more) solid-state imaging devices among said M solid-state imaging devices; and
a switching control unit operable to, when malfunction in any of said m solid-state imaging devices has been detected, switch a source of output to said signal processing unit from said solid-state imaging device in which a malfunction is detected to one of said solid-state imaging devices in which no malfunction is detected.

40. The camera according to Claim 39,
wherein said switching control unit is operable to shift the other solid-state imaging devices than said m solid-state imaging devices to an inactive state, and
when malfunction in any of said m solid-state imaging devices has been detected, shift said solid-state imaging device in which a malfunction is detected to the inactive state, and shift one of said solid-state imaging devices in which no malfunction is detected to an active state.

41. The camera according to Claim 40,
wherein said switching control unit is operable to switch between the active state and the inactive state by controlling supply of power to said solid-state imaging device.

42. The camera according to Claim 40,
wherein said switching control unit is operable to switch between the active state and the inactive state by controlling a driving signal sent to said solid-state imaging device.

43. The camera according to Claim 40,
wherein said switching control unit is operable to switch between the active state and the inactive state by starting or stopping a driving signal sent to said solid-state imaging device while supplying power to said M solid-state imaging devices at all times.

44. The camera according to Claim 42 or 43,
wherein said switching control unit is operable to switch between the active state and the inactive state by making a level of the driving signal sent to said solid-state imaging device fixed.

45. The camera according to one of Claims 39 to 44, further comprising
at least one optical system operable to disperse incident light to two or more of said solid-state imaging devices.

46. A camera comprising the solid-state imaging device according to one of Claims 1 to 38.

47. An automobile comprising the solid-state imaging device according to any of Claims 1 to 38 or the camera according to one of Claims 39 to 45.

48. A monitoring device comprising the solid-state imaging device according to one of Claims 1 to 38 or the camera according to any of Claims 39 to 45.
